# EUROPEAN PATENT SPECIFICATION

(11) **EP 4 228 228 B1**
(45) Date of publication and mention of the grant of the patent: **11.06.2025**
(21) Application number: 21892355.5
(22) Date of filing: 12.11.2021
(51) Int. Cl.: H04M 1/02, H01Q 1/24, H04M 1/18, H01Q 7/00

(54) **ELECTRONIC DEVICE INCLUDING HOUSING, AND HOUSING MANUFACTURING METHOD**
ELEKTRONISCHE VORRICHTUNG MIT GEHÄUSE UND GEHÄUSEHERSTELLUNGSVERFAHREN
DISPOSITIF ÉLECTRONIQUE COMPORTANT UN BOÎTIER, ET PROCÉDÉ DE FABRICATION DE BOÎTIER

(30) Priority: 13.11.2020 KR 20200152302; 22.01.2021 KR 20210009587
(43) Date of publication of application: 16.08.2023
(73) Proprietor: Samsung Electronics Co., Ltd., Suwon-si, Gyeonggi-do 16677 (KR)
(72) Inventor: KIM, Gidae, Suwon-si, Gyeonggi-do 16677 (KR); BAEK, Moohyun, Suwon-si, Gyeonggi-do 16677 (KR)
(74) Representative: Gulde & Partner
(86) International application number: PCT/KR2021/016495
(87) International publication number: WO 2022/103188

(56) References cited:
- KR-A- 20170 053 401
- KR-A- 20190 011 169
- KR-A- 20190 054 384
- KR-A- 20190 097 553
- KR-A- 20200 022 803
- US-A1- 2012 176 754
- US-A1- 2018 375 973
- US-A1- 2020 201 386
- US-A1- 2020 252 492
- US-A1- 2021 037 126

## Description

### [Technical Field]

Various embodiments of this document relate to an electronic device including a housing and a method for manufacturing the housing.

### [Background Art]

As design has emerged as a differentiating factor due to the upward standardization of specifications for electronic devices such as smartphones, there is a trend to implement exterior members (e.g., housing) to have a visually luxurious texture.

KR 20170053401 A discloses an electronic device including a front surface, a rear surface, and a conductive side wall, the conductive sidewall includes at least a portion of the metal housing or may be disposed as part of the interior of the metal housing, a pair of conductive patterns are disposed on the first non-conductive member, and the conductive pattern is disposed at a boundary portion of a housing to which a member made of a different material is coupled.

KR 20190054384 A discloses an electronic device having a side member, which includes an outer structure formed of a first metal material and an inner structure formed of a second metal material different from the first metal material, the inner structure includes a first polymeric material disposed in the space adjacent the side member.

US 2020201386 A1 discloses an electronic device including the display, metal plate, and rear cover, the metal plate can take a role of a bracket for the display, the display, rear cover, and metal frame may configure an external housing of the electronic device, the material of the metal frame and the material of the metal plate may include at least one different metallic material, and the metal plate is displaced from the metal frame and combined with the metal frame by the non-conductive bonding member.

KR 20190097553 A discloses an electronic device where the rear plate or the side member is in contact with the polymer structure, a larger contact area therebetween may be advantageous for maintaining high bonding strength, the electrical connection may be limited by processing the inner surface of the rear plate, the inner surface of the side member, and the polymer structure may be used so as to limit the electrical connection between the conductive piece, the rear plate, and the side member.

### [Disclosure of Invention]

### [Technical Problem]

An electronic device may include a metal exterior member, and such a metal exterior member can improve durability as well as provide a luxurious design unique to metal. As the range of usable applications on electronic devices such as smartphones widens, the number of antennas included in electronic devices continues to increase. An electronic device may utilize a metal exterior member as at least a portion of the antenna (e.g., radiator).

Various embodiments of this document may provide an electronic device including a housing having a metal texture and usable as an antenna, and a housing manufacturing method.

The technical objectives to be achieved in this document are not limited to those mentioned above, and other technical objectives not mentioned will be understood by those skilled in the art from the following description.

### [Solution to Problem]

The invention is set out in the appended set of claims, wherein the figures and respective description relate to advantageous embodiments thereof.

According to the invention, an electronic device includes: a housing that includes a front surface of the electronic device, a rear surface of the electronic device, and a side surface at least partially surrounding a space between the front surface and the rear surface; and a display positioned in the space and at least partially viewed through the front surface, wherein the housing includes: an outer structure including a first metal material and constituting at least a portion of the side surface; an inner structure including a second metal material different from the first metal material and positioned in the space; and a non-conductive structure including a polymer and connected to the outer structure and the inner structure, wherein the outer structure and the inner structure are electrically connected at a position overlapping with an opening formed in the non-conductive structure.

According to the invention, a method for manufacturing a housing of an electronic device includes: forming an outer structure including a first metal material; forming an inner structure including a second metal material different from the first metal material; forming a non-conductive structure including a polymer and coupled to the inner structure; coupling the outer structure to the non-conductive structure; and electrically connecting the outer structure and the inner structure at a position overlapping with an opening formed in the non-conductive structure.

### [Advantageous Effects of Invention]

The housing included in the electronic device according to various embodiments of this document may facilitate the implementation of a beautiful exterior appearance having a metal texture, and an antenna, and it can reduce costs due to a simplified manufacturing method.

Other effects that can be obtained or predicted due to various embodiments of this document may be explicitly or implicitly disclosed in the detailed description of the embodiments of this document.

### [Brief Description of Drawings]

FIG. 1 is a block diagram of an electronic device in a network environment according to various embodiments.
FIG. 2 is a front perspective view of an electronic device according to an embodiment.
FIG. 3 is a rear perspective view of the electronic device of FIG. 2 according to an embodiment.
FIG. 4 is an exploded view of the electronic device of FIG. 2 according to an embodiment.
FIG. 5 shows a cross-sectional structure of a y-z plane for line A-A' in FIG. 3 in an embodiment.
FIG. 6 is a plan view of a front case when viewed in a positive z-axis direction of FIG. 4 in one embodiment.
FIG. 7 is an enlarged view of a portion indicated by reference symbol 'B', 'C', 'D', or 'E' in FIG. 6, for example.
FIG. 8 is a perspective view of the portion indicated by reference symbol 'B', 'C', 'D', or 'E' in FIG. 6, for example.
FIG. 9 shows an outer structure and an inner structure at the portion indicated by reference symbol 'B', 'C', 'D', or 'E' in FIG. 6, for example.
FIG. 10 is a perspective view of a portion indicated by reference symbol 'F' in FIG. 6, for example.
FIG. 11 shows the outer structure and the inner structure at the portion indicated by reference symbol 'F' in FIG. 6, for example.
FIG. 12 illustrates a manufacturing flow of the front case in FIG. 4 according to an embodiment.
FIGS. 13, 14, 15, 16, 17, 18, 19A and 19B are reference drawings for explaining the manufacturing flow of FIG. 12, for example.
FIG. 20 shows a cross-sectional structure of a y-z plane for line A-A' in FIG. 3 in another embodiment.
FIGS. 21A and 21B show cross-sectional structures for explaining the manufacturing flow of the front case in FIG. 4 in another embodiment.
FIG. 22 shows a cross-sectional structure of a part of the front case in FIG. 4 in another embodiment.
FIG. 23 or 24 shows a cross-sectional structure related to ultrasonic welding between the outer structure and the inner structure as another embodiment modified from the example of FIG. 22.

### [Mode for the Invention]

Hereinafter, various embodiments disclosed herein will be described with reference to the accompanying drawings.

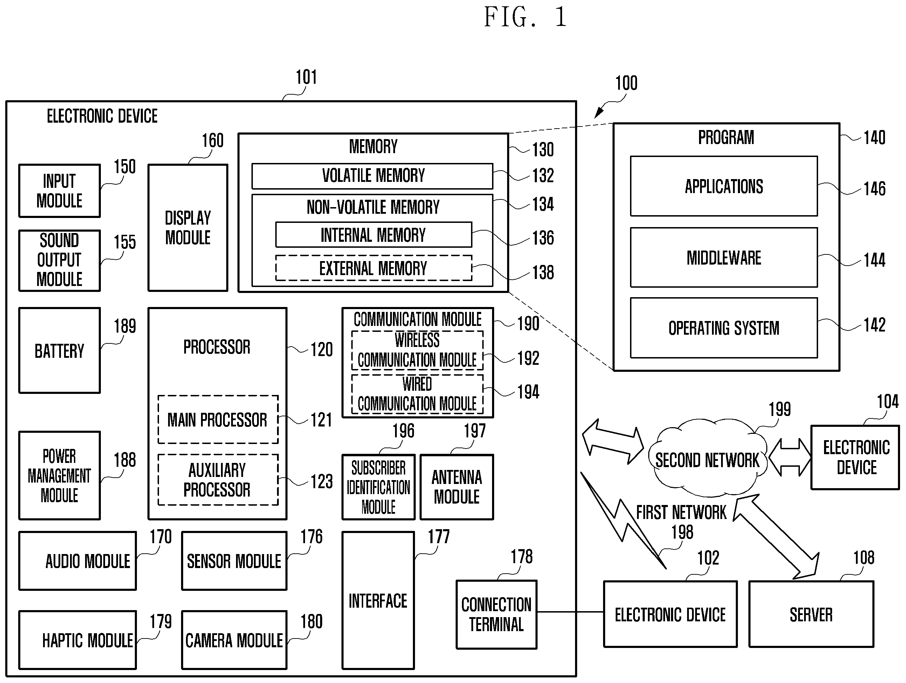

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

With regard to the description of the drawings, similar reference numerals may be used to refer to similar or related elements. A singular form of a noun corresponding to a specific item may include one or multiple pieces of the item unless the relevant context clearly indicates otherwise. In this document, each of phrases such as "A or B," "at least one of A and B," "at least one of A or B," "A, B or C," "at least one of A, B and C," and "at least one of A, B or C" may include any one of or all possible combinations of the items enumerated together in the corresponding one of the phrases. Terms such as "1st" and "2nd," or "first" and "second" may be used to simply distinguish a corresponding component from another, and does not limit the components in other aspect (e.g., importance or order).

The electronic devices according to various embodiments disclosed in this document may be devices of various types. The electronic devices may include, for example, a portable communication device (e.g., smartphone), a computer device, a portable multimedia device, a portable medical device, a camera, a wearable device, or a home appliance. The electronic devices according to embodiments of this document are not limited to the above-described devices.

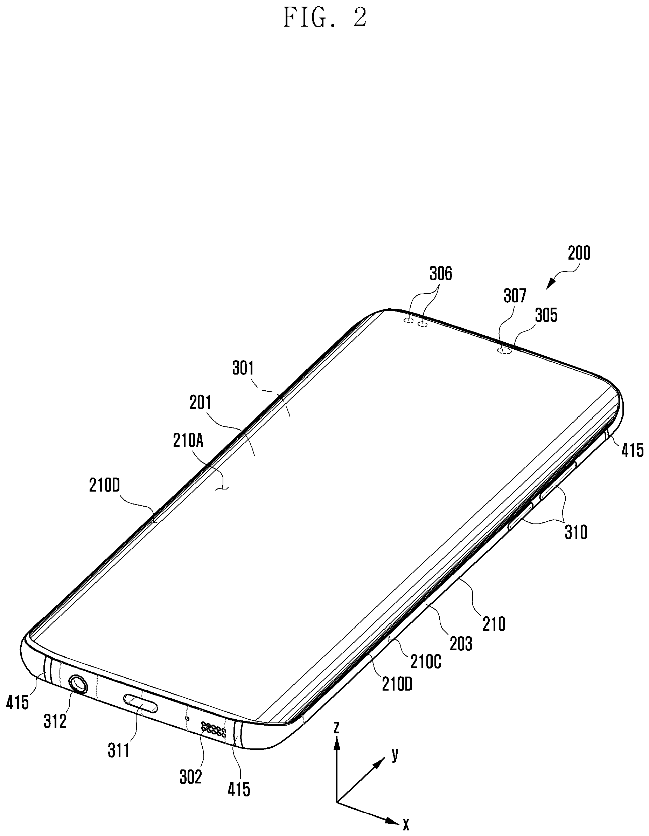

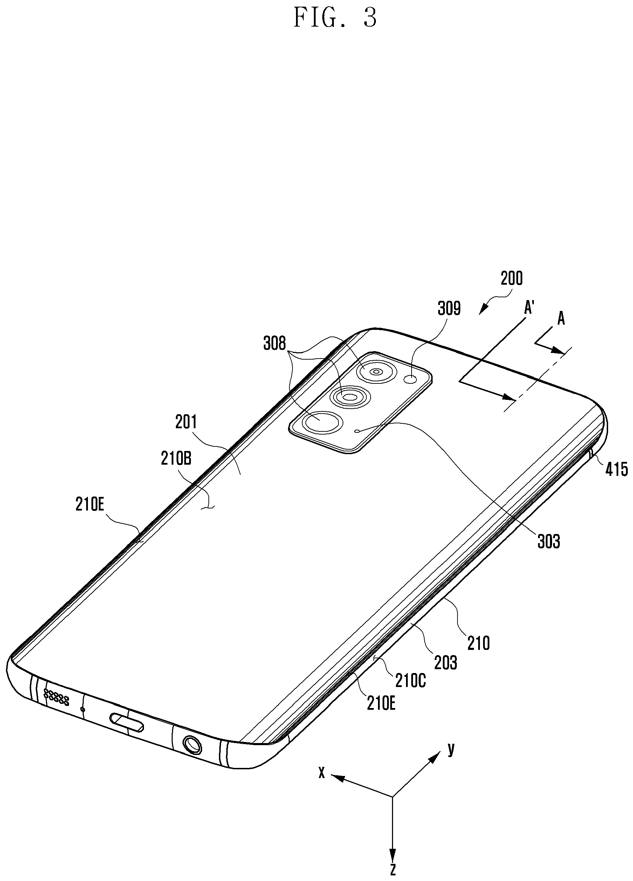

FIG. 2 is a front perspective view of an electronic device 200 according to an embodiment. FIG. 3 is a rear perspective view of the electronic device 200 of FIG. 2 according to an embodiment.

With reference to FIG. 2 and FIG. 3, in an embodiment, the electronic device 200 (e.g., electronic device 101 in FIG. 1) may include a housing 210 that includes a first surface (or, front surface) 210A, a second surface (or, rear surface) 210B, and a side surface 210C surrounding the space between the first surface 210A and the second surface 210B. In a certain embodiment, the housing 210 may refer to a structure forming at least some of the first surface 210A, the second surface 210B, and the side surface 210C. The first surface 210A may be formed by a front plate (or, first plate) 201 that is substantially transparent at least in part (e.g., glass plate containing various coating layers, or polymer plate). The second surface 210B may be formed by a rear plate (or, second plate) 202 that is substantially opaque. The rear plate 202 may be made of, for example, coated or colored glass, ceramic, polymer, metal (e.g., aluminum, stainless steel (STS), or magnesium), or a combination thereof. The side surface 210C may be formed by a lateral bezel structure (or, "lateral member") 203 that is coupled to the front plate 201 and the rear plate 202, and the lateral bezel structure 203 may contain a metal and/or a polymer. In a certain embodiment, the rear plate 202 and the lateral bezel structure 203 may be integrally formed and contain the same material (e.g., metal material such as aluminum).

In an embodiment, the front plate 201 may include two first regions 210D that are curved and seamlessly extended from the first surface 210A toward the rear plate 202. The first regions 210D may be formed adjacent respectively to the long edges of the front plate 201. The rear plate 202 may include two second regions 210E that are curved and seamlessly extended from the second surface 210B toward the front plate 201. The second regions 210E may be formed adjacent respectively to the long edges of the rear plate 202. The side surface 210C may have a first thickness (or width) on a side where the first regions 210D or the second regions 210E are not present, and may have a second thickness thinner than the first thickness on a side where the first regions 210D and the second regions 210E are present. In a certain embodiment, the front plate 201 may be implemented by including one of the first regions 210D or may be implemented without the curved first regions 210D. In a certain embodiment, the rear plate 202 may be implemented by including one of the second regions 210E or may be implemented without the curved second regions 210E.

According to an embodiment, the electronic device 200 may include at least one of a display 301, a first audio module 302, a second audio module 303, a third audio module 304, a fourth audio module 305, a sensor module 306, a first camera module 307, plural second camera modules 308, a light emitting module 309, an input module 310, a first connection terminal module 311, or a second connection terminal module 312. In a certain embodiment, the electronic device 200 may be configured to omit at least one of the above components or further include other components.

The display area (e.g., screen display area, or active area) of the display 301 may be visually exposed through, for example, the front plate 201. In an embodiment, the electronic device 200 may be implemented to maximize the display area seen through the front plate 201 (e.g., large screen or full screen). For example, the display 301 may be implemented to have an outer shape substantially identical to that of the front plate 201. As another example, the distance between the outer periphery of the display 301 and the outer periphery of the front plate 201 may be formed to be substantially the same. In an embodiment, the display 301 may include a touch sensing circuit. In a certain embodiment, the display 301 may include a pressure sensor capable of measuring the intensity (pressure) of a touch. In a certain embodiment, the display 301 may be combined with a digitizer (e.g., electromagnetic induction panel) that detects an electronic pen of a magnetic field type (e.g., stylus pen), or may be positioned adjacent to the digitizer.

The first audio module 302 may include, for example, a first microphone located inside the electronic device 200 and a first microphone hole formed on the side surface 210C in correspondence to the first microphone. The second audio module 303 may include, for example, a second microphone located inside the electronic device 200 and a second microphone hole formed on the second surface 210B in correspondence to the second microphone. The position or number of audio modules relative to the microphone may vary without being limited to the illustrated example. In a certain embodiment, the electronic device 200 may include a plurality of microphones usable for detecting the direction of a sound.

The third audio module 304 may include, for example, a first speaker located inside the electronic device 200 and a first speaker hole formed on the side surface 210C in correspondence to the first speaker. The fourth audio module 305 may include, for example, a second speaker located inside the electronic device 200 and a second speaker hole formed on the first surface 210A in correspondence to the second speaker. In an embodiment, the first speaker may include an external speaker. In an embodiment, the second speaker may include a receiver for a call, and the second speaker hole may be referred to as a receiver hole. The location or number of the third audio module 304 or the fourth audio module 305 may vary without being limited to the illustrated example. In a certain embodiment, the microphone hole and the speaker hole may be implemented as a single hole. In a certain embodiment, the third audio module 304 or the fourth audio module 305 may include a piezo speaker without a speaker hole.

The sensor module 306 may generate an electrical signal or data value corresponding to, for example, an internal operating state of the electronic device 200 or an external environmental state. In an embodiment, the sensor module 306 may include an optical sensor located inside the electronic device 200 in correspondence to the first surface 210A. The optical sensor may include, for example, a proximity sensor or an illuminance sensor. The optical sensor may be aligned with an opening formed in the display 301. External light can reach the optical sensor through the front plate 201 and the opening of the display 301. In a certain embodiment, the optical sensor may be disposed at the bottom of the display 301, and may perform a related function without visually revealing (or exposing) its position. For example, the optical sensor may be located on the rear surface of the display 301 or located below or beneath the display 301. In a certain embodiment, the optical sensor may be positioned in alignment with a recess formed in the rear surface of the display 301. The optical sensor may be disposed to overlap at least a portion of the screen and perform a sensing function without being exposed to the outside. In this case, a region of the display 301 overlapping at least partially with the optical sensor may include a different pixel structure and/or wiring structure in comparison to other regions. For example, the region of the display 301 overlapping at least partially with the optical sensor may have a different pixel density in comparison to other regions. In a certain embodiment, a plurality of pixels may be not disposed in the region of the display 301 overlapping at least partially with the optical sensor. In a certain embodiment, the electronic device 200 may include a biometric sensor (e.g., fingerprint sensor) located below the display 301. The biometric sensor may be implemented with an optical or ultrasonic technique, and the location or number thereof may vary. The electronic device 200 may further include at least one of various other sensor modules such as gesture sensor, gyro sensor, barometric pressure sensor, magnetic sensor, acceleration sensor, grip sensor, color sensor, infrared (IR) sensor, temperature sensor, or humidity sensor.

The first camera module 307 (e.g., front camera module) may be located inside the electronic device 200 in correspondence to the first surface 210A. A plurality of second camera modules 308 (e.g., rear camera modules) may be located inside the electronic device 200 in correspondence to the second surface 210B. The first camera module 307 and/or the plural second camera modules 308 may include one or plural lenses, an image sensor, and/or an image signal processor. The location or number of the first camera module or the second camera module may vary without being limited to the illustrated example.

According to an embodiment, the display 301 may include an opening aligned with the first camera module 307. External light can reach the first camera module 307 through the front plate 201 and the opening of the display 301. In a certain embodiment, the opening of the display 301 may be formed in a notch shape according to the position of the first camera module 307. In a certain embodiment, the first camera module 307 may be disposed at the bottom of the display 301, and may perform a related function (e.g., image capture) without visually revealing (or exposing) its position. For example, the first camera module 307 may be located on the rear surface of the display 301 or located below or beneath the display 301, and may include a hidden under display camera (UDC). In a certain embodiment, the first camera module 307 may be positioned in alignment with a recess formed in the rear surface of the display 301. The first camera module 307 may be disposed to overlap at least a portion of the screen and may obtain an image of an external subject without being visually exposed to the outside. In this case, a region of the display 301 overlapping at least partially with the first camera module 307 may include a different pixel structure and/or wiring structure in comparison to other regions. For example, the region of the display 301 overlapping at least partially with the first camera module 307 may have a different pixel density in comparison to other regions. The pixel structure and/or wiring structure formed in the region of the display 301 overlapping at least partially with the first camera module 307 may reduce loss of light between the outside and the first camera module 307. In a certain embodiment, pixels may be not disposed in the region of the display 301 overlapping at least partially with the first camera module 307. In a certain embodiment, the electronic device 200 may further include a light emitting module (e.g., light source) located inside the electronic device 200 in correspondence to the first surface 210A. The light emitting module may provide, for example, state information of the electronic device 200 in the form of light. In a certain embodiment, the light emitting module may provide a light source linked with the operation of the first camera module 307. The light emitting module may include, for example, an LED, an IR LED, or a xenon lamp.

According to an embodiment, the plural second camera modules 308 may have different attributes (e.g., angles of view) or functions, and may include, for example, dual cameras or triple cameras. The plural second camera modules 308 may include a plurality of camera modules including lenses having different angles of view, and the electronic device 200 may control the camera module being operated therein to change the angle of view according to the user's selection. The plural second camera modules 308 may include at least one of a wide-angle camera, a telephoto camera, a color camera, a monochrome camera, or an infrared (IR) camera (e.g., time of flight (TOF) camera, structured light camera). In a certain embodiment, the IR camera may be operated as at least a part of the sensor module. The light emitting module 309 (e.g., flash) may include a light source for the plural second camera modules 308. The light emitting module 309 may include, for example, an LED or a xenon lamp.

The input module 310 may include, for example, one or more key input devices. The one or more key input devices may be located, for example, in an opening formed in the side surface 210C. In a certain embodiment, the electronic device 100 may not include some or all of the above-mentioned key input devices, and a key input device not included may be implemented as a soft key using the display 301. The location or number of input modules 310 may vary, and the input module 310 may include at least one sensor module in a certain embodiment.

The first connection terminal module 311 (e.g., first connector module, or first interface terminal module) may include, for example, a first connector (or, first interface terminal) located inside the electronic device 200 and a first connector hole formed on the side surface 210C in correspondence to the first connector. The second connection terminal module 312 (e.g., second connector module, or second interface terminal module) may include, for example, a second connector (or, second interface terminal) located inside the electronic device 200 and a second connector hole formed on the side surface 210C in correspondence to the second connector. The electronic device 200 may transmit and/or receive power and/or data to and/or from an external electronic device electrically connected to the first connector or the second connector. In an embodiment, the first connector may include a universal serial bus (USB) connector or a high definition multimedia interface (HDMI) connector. In an embodiment, the second connector may include an audio connector (e.g., headphone connector, earset connector). The location or number of connection terminal modules may vary without being limited to the illustrated example.

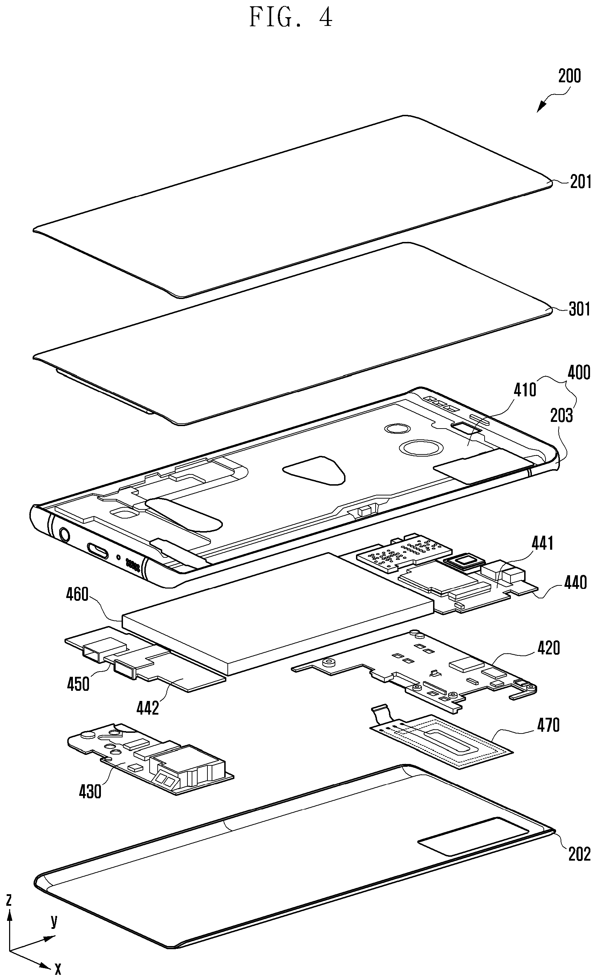

FIG. 4 is an exploded view of the electronic device 200 of FIG. 2 according to an embodiment.

With reference to FIG. 4, in an embodiment, the electronic device 200 may include a front plate 201, a rear plate 202, a lateral bezel structure 203, a first support member 410, a second support member 420, a third support member 430, a display 301, a first substrate assembly 440, a second substrate assembly 450, a battery 460, or an antenna structure 470. In a certain embodiment, the electronic device 200 may be configured to omit at least one of the above components (e.g., second support member 420 or third support member 430) or further include other components.

The first support member 410 may be, for example, located inside the electronic device 200 and connected to the lateral bezel structure 203, or may be integrally formed with the lateral bezel structure 203. The first support member 410 may be made of, for example, a metal material and/or a non-metal material (e.g., polymer). In an embodiment, the conductive portion included in the first support member 410 may serve as an electromagnetic shield for the display 301, the first substrate assembly 440, and/or the second substrate assembly 450. The first support member 410 and the lateral bezel structure 203 may be collectively referred to as a front case 400. The first support member 410 is a part of the front case 400 on which components such as the display 301, the first substrate assembly 440, the second substrate assembly 450, or the battery 460 are disposed, and it may contribute to durability or rigidity (e.g., torsional rigidity) of the electronic device 200. In the following description, the first support member 410 may be referred to as a support structure (e.g., bracket, or mounting plate).

The display 301 may be positioned, for example, between the support structure 410 and the front plate 201, and may be disposed on one surface of the support structure 410. The first substrate assembly 440 and the second substrate assembly 450 may be positioned, for example, between the support structure 410 and the rear plate 202, and may be disposed on the other surface of the support structure 410. The battery 460 may be positioned, for example, between the support structure 410 and the rear plate 202, and may be disposed on the support structure 410.

According to an embodiment, the first substrate assembly 440 may include a first printed circuit board 441 (e.g., printed circuit board (PCB) or printed circuit board assembly (PBA)). The first substrate assembly 440 may include various electronic components electrically connected to the first printed circuit board 441. These electronic components may be disposed on the first printed circuit board 441, or may be electrically connected to the first printed circuit board 441 through an electrical path such as a cable or a flexible printed circuit board (FPCB). With reference to FIGS. 2 and 3, the above electronic components may include, for example, second microphone included in the second audio module 303, second speaker included in the fourth audio module 305, sensor module 306, first camera module 307, plural second camera modules 308, light emitting module 309, or input module 310.

According to an embodiment, the second substrate assembly 450 may be spaced apart from the first substrate assembly 440 with the battery 460 interposed therebetween when viewed from above the front plate 201 (e.g., when viewed in negative z-axis direction). The second substrate assembly 450 may include a second printed circuit board 451 electrically connected to the first printed circuit board 441 of the first substrate assembly 440. The second substrate assembly 450 may include various electronic components electrically connected to the second printed circuit board 451. These electronic components may be disposed on the second printed circuit board 451 or may be electrically connected to the second printed circuit board 451 through an electrical path such as a cable or FPCB. With reference to FIGS. 2 and 3, the above electronic components may include, for example, first microphone included in the first audio module 302, first speaker included in the third audio module 304, first connector included in the first connection terminal module 311, or second connector included in the second connection terminal module 312.

According to a certain embodiment, the first substrate assembly 440 or the second substrate assembly 450 may include a primary PCB (or, main PCB or master PCB), a secondary PCB (or slave PCB) partially overlapping the primary PCB, and/or an interposer substrate between the master PCB and the secondary PCB.

The battery 460 is an equipment for supplying power to at least one component of the electronic device 200, and may include, for example, a non-rechargeable primary battery, a rechargeable secondary battery, or a fuel cell. The battery 460 may be integrally disposed inside the electronic device 200 or may be disposed detachably from the electronic device 200.

According to an embodiment, the second support member 420 may be positioned between the support structure 410 and the rear plate 202, and may be coupled to the support structure 410 by using a fastening element such as a bolt. At least a portion of the first substrate assembly 440 may be positioned between the support structure 410 and the second support member 420, and the second support member 420 may cover and protect the first substrate assembly 440. The third support member 430 may be at least partially spaced apart from the second support member 430 with the battery 460 interposed therebetween when viewed from above the rear plate 202 (e.g., when viewed in positive z-axis direction). The third support member 430 may be positioned between the support structure 410 and the rear plate 202, and may be coupled to the support structure 410 by using a fastening element such as a bolt. At least a portion of the second substrate assembly 450 may be positioned between the support structure 410 and the third support member 430, and the third support member 430 may cover and protect the second substrate assembly 450. The second support member 420 and/or the third support member 430 may be made of a metal material and/or a non-metal material (e.g., polymer). In a certain embodiment, the second support member 420 may serve as an electromagnetic shield for the first substrate assembly 440, and the third support member 430 may serve as an electromagnetic shield for the second substrate assembly 450. In a certain embodiment, the second support member 420 and/or the third support member 430 may be referred to as a rear case.

According to a certain embodiment, an integral substrate assembly including the first substrate assembly 440 and the second substrate assembly 450 may be implemented. For example, when viewed from above the rear plate 202 (e.g., when viewed in positive z-axis direction), the substrate assembly may include a first part and a second part spaced apart from each other with the battery 460 interposed therebetween, and a third part extended between the battery 460 and the lateral bezel structure 203 and connecting the first part and the second part. In this case, an integral support member including the second support member 420 and the third support member 430 may be implemented.

According to an embodiment, the antenna structure 470 may be positioned between the second support member 420 and the rear plate 202. In a certain embodiment, the antenna structure 470 may be positioned between the battery 460 and the rear plate 202. The antenna structure 470 may be implemented in the form of a film such as FPCB. The antenna structure 470 may include at least one conductive pattern utilized as a loop-type radiator. For example, the at least one conductive pattern may include a planar spiral conductive pattern (e.g., planar coil, or pattern coil). In an embodiment, the at least one conductive pattern included in the antenna structure 470 may be electrically connected to a wireless communication circuit (or, wireless communication module) included in the first substrate assembly 440. For example, the at least one conductive pattern may be utilized for short-range wireless communication such as near field communication (NFC). As another example, the at least one conductive pattern may be used for magnetic secure transmission (MST) for transmitting and/or receiving a magnetic signal. In a certain embodiment, the at least one conductive pattern included in the antenna structure 470 may be electrically connected to a power transceiver circuit included in the first substrate assembly 440. The power transceiver circuit may use at least one conductive pattern to wirelessly receive power from an external electronic device or wirelessly transmit power to an external electronic device. The power transceiver circuit may include a power management module, and may include, for example, a power management integrated circuit (PMIC) or a charger integrated circuit (charger IC). The power transceiver circuit may charge the battery 460 by using power wirelessly received through the conductive pattern.

The electronic device 200 may further include various components according to its provision form. Although possible variations of the components according to the trend of digital convergence are too numerous to enumerate, the electronic device 200 may further include an element comparable to the above-described components. In various embodiments, depending on the form of provision, a specific component may be excluded from the above components or replaced with another component.

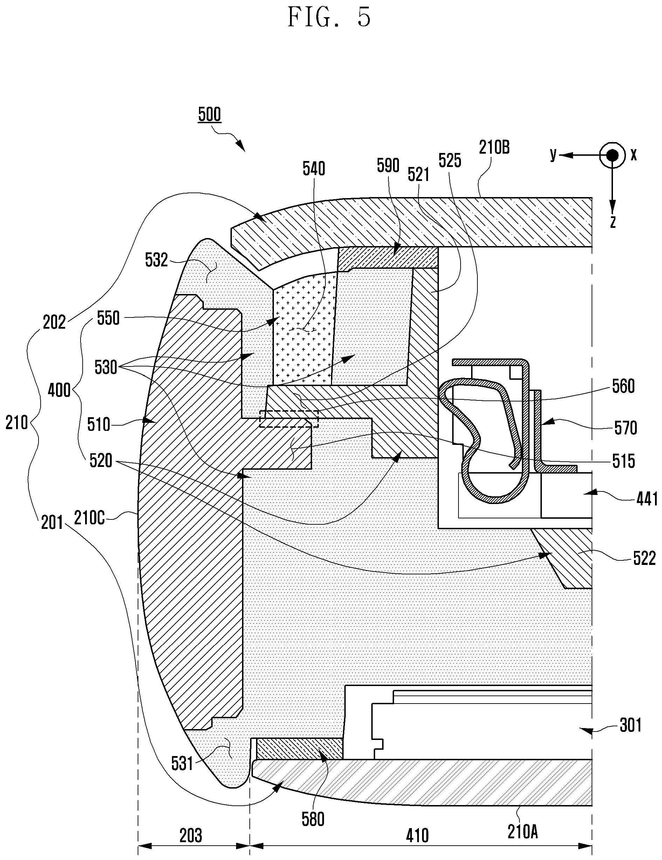

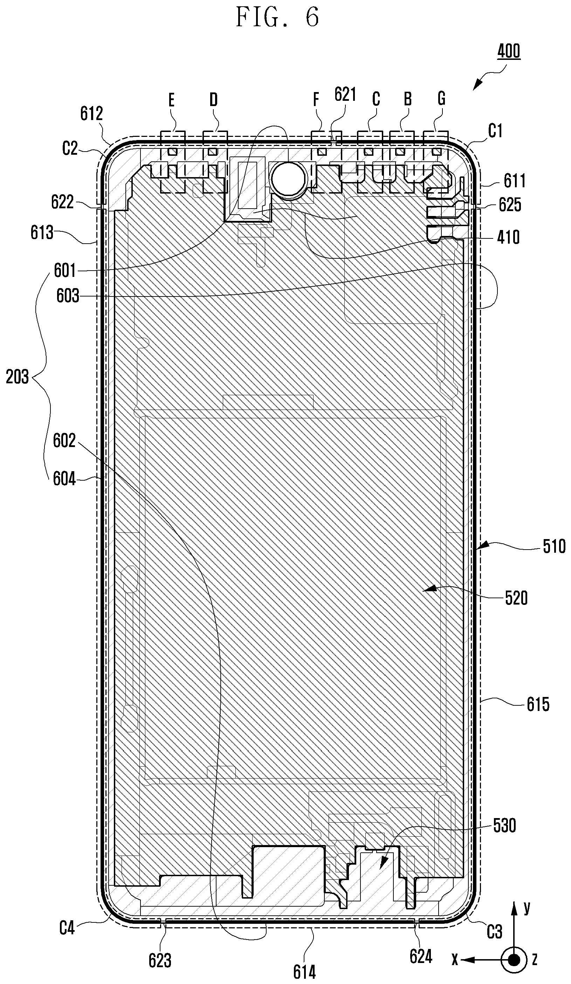

FIG. 5 shows a cross-sectional structure 500 of the y-z plane for line A-A' in FIG. 3 in an embodiment. FIG. 6 is a plan view of a front case 400 in FIG. 4 when viewed in a positive z-axis direction in one embodiment.

With reference to FIG. 5, in an embodiment, the cross-sectional structure 500 may include a housing 210, a display 301, a first printed circuit board 441, a flexible conductive member 570, a first adhesive member 580, and/or a second adhesive member 590.

The housing 210 may include, for example, a front surface 210A of the electronic device 200 (see FIG. 2), and a rear surface 210B of the electronic device 200, and a side surface 210C surrounding at least some of the space between the front surface 210A and the rear surface 210B. The housing 210 may include a front plate 201, a rear plate 202, and a front case 400. The front plate 201 may constitute at least a portion of the front surface 210A. The rear plate 202 may constitute at least a portion of the rear surface 210B. The front case 400 may include a lateral bezel structure 203 constituting at least a portion of the side surface 210C, and a support structure 410 positioned between the front plate 201 and the rear plate 202. The lateral bezel structure 203 (see FIG. 6 ) may include, for example, a first bezel part 601, a second bezel part 602, a third bezel part 603, or a fourth bezel part 604. The first bezel part 601 and the second bezel part 602 may be spaced apart from each other and extended in parallel. The third bezel part 603 may connect one end of the first bezel part 601 and one end of the second bezel part 602. The fourth bezel part 604 may connect the other end of the first bezel part 601 and the other end of the second bezel part 602, and may be extended parallel to and spaced apart from the third bezel part 603. A first corner portion C1 at which the first bezel part 601 and the third bezel part 603 are connected, a second corner portion C2 at which the first bezel part 601 and the fourth bezel part 604 are connected, a third corner portion C3 at which the second bezel part 602 and the third bezel part 603 are connected, and/or a fourth corner portion C4 at which the second bezel part 602 and the fourth bezel part 604 are connected may be formed in a round shape. The first bezel part 601 and the second bezel part 602 may have a first length extended in the x-axis direction, and the third bezel part 603 and the fourth bezel part 604 may have a second length greater than the first length and extended in the y-axis direction. In a certain embodiment, the first length and the second length may be formed to be substantially the same. The display 301 may be disposed on the support structure 410 between the support structure 410 and the front plate 201. The first printed circuit board 441 may be disposed on the support structure 410 between the support structure 410 and the rear plate 202. The front plate 201 may be coupled to the support structure 410 by using the first adhesive member 580. The first adhesive member 580 may be disposed in a ring shape adjacent to the edge of the front plate 201. The first adhesive member 580 may prevent foreign substances such as water or dust from entering the space between the front plate 201 and the support structure 410 through the space between the front plate 201 and the lateral bezel structure 203. The rear plate 202 may be coupled to the support structure 410 by using the second adhesive member 590. The second adhesive member 590 may be disposed in a ring shape adjacent to the edge of the rear plate 202. The second adhesive member 590 may prevent foreign substances such as water or dust from entering the space between the rear plate 202 and the support structure 410 through the space between the rear plate 202 and the lateral bezel structure 203. The first adhesive member 580 or the second adhesive member 590 may include, for example, heat reactive adhesive material, photoreactive adhesive material, general adhesive, or double-sided tape.

With reference to FIGS. 5 and 6, in an embodiment, the front case 400 may include an outer structure 510, an inner structure 520, a non-conductive structure 530, or a seal member 550. The outer structure 510 (or, outer metal structure, first metal structure) may include a first metal material and may constitute at least some of the side surface 210C. The inner structure 520 (or, inner metal structure, second metal structure) may include a second metal material different from the first metal material, and may be located in the space between the front plate 201 and the rear plate 202. The first metal material may include, for example, titanium, amorphous alloy, metal-ceramic composite material (e.g., cermet), or stainless steel. The second metal material may include, for example, magnesium, magnesium alloy, aluminum, aluminum alloy, zinc alloy, or copper alloy. In a certain embodiment, the first metal material, as a metal material different from the second metal material, may include, for example, magnesium, magnesium alloy, aluminum, aluminum alloy, zinc alloy, or copper alloy. The first metal material or the second metal material may be various other materials. The outer structure 510 or the inner structure 520 may be formed by using various processing methods such as computer numerical control (CNC), die casting, or pressing. The non-conductive structure 530 may include a polymer and may be connected to the outer structure 510 and the inner structure 520. Adhesive materials of various polymers or sealants may be positioned between the non-conductive structure 530 (or, polymer structure) and the outer structure 510 and/or between the non-conductive structure 530 and the inner structure 520. The non-conductive structure 530 may include, for example, various polymers such as engineering plastic (e.g., polycarbonate (PC), polymethyl methacrylate (PMMA)). As another example, the non-conductive structure 530 may include a material (e.g., fiber reinforced plastic (FRP)) obtained by mixing engineering plastic with various reinforcing materials such as glass fiber or carbon fiber. In an embodiment, the non-conductive structure 530 may include a polymer resin such as polyether ether ketone, polyphenylene sulfide, polybutylene terephthalate, polyimide, or polycarbonate. The non-conductive structure 530 may be formed in a state of being coupled to the inner structure 520 by using insert molding.

According to an embodiment, the non-conductive structure 530 may include an opening 540. The outer structure 510 and the inner structure 520 may be electrically connected at a position overlapping with (or aligned with) the opening 540. For example, when viewed from above the rear plate 202 (e.g., viewed in positive z-axis direction), a portion 515 of the outer structure 510 and a portion 525 of the inner structure 520 may overlap in alignment with the opening 540. The portion 525 of the inner structure 520 may be positioned between the rear plate 202 and the portion 515 of the outer structure 510. The portion 515 of the outer structure 510 and the portion 525 of the inner structure 520 may be in physical contact and electrically connected. In an embodiment, the portion 515 of the outer structure 510 and the portion 525 of the inner structure 520 may be electrically connected by using welding at a position overlapping with (or aligned with) the opening 540. For example, the welding equipment may apply heat to the portion 525 of the inner structure 520 in the opening 540, and the boundary between the portion 525 of the inner structure 520 and the portion 515 of the outer structure 510 may be melted and bonded. The welding between the portion 525 of the inner structure 520 and the portion 515 of the outer structure 510 may be performed so as to reduce the influence on the vicinity of the weld zone 560. For example, welding may be performed so as not to cause deterioration of the waterproof function by ensuring that the bonding portion (or joint portion) between the inner structure 520 and the non-conductive structure 530 and/or between the outer structure 530 and the non-conductive structure 530 is not deformed or damaged due to heat from welding. For example, the portion 525 of the inner structure 520 may be formed to have a thickness of about 0.3 mm to about 1 mm or less (e.g., thickness in z-axis direction), and in this case, a low-power welding equipment (e.g., welding equipment using power of about 5 kW or less (e.g., about 1 kW)) capable of applying a level of heat necessary for welding between the portion 515 of the outer structure 510 and the portion 525 of the inner structure 520 may be used. Welding may be performed under a specific time condition to reduce thermal influence on the vicinity of the weld zone 560. To increase the bonding force (or, binding force) (e.g., mechanical strength resistant to destruction by external forces, or environmental strength resistant to destruction by the environment (e.g., heat)) of the interface between the portion 515 of the outer structure 510 and the portion 525 of the inner structure 520, the first metal material included in the outer structure 510 and the second metal material included in the inner structure 520 can be determined as materials having binding affinity during welding.

According to a certain embodiment, a conductive adhesive material may be positioned between the portion 515 of the outer structure 510 and the portion 525 of the inner structure 520. The conductive adhesive material may include, for example, a heat reactive conductive adhesive material, and may be melt-bonded with the portion 515 of the outer structure 510 and the portion 525 of the inner structure 520 during welding. The conductive adhesive material may contribute to increasing the interfacial bonding force with the outer structure 510 and the interfacial bonding force with the inner structure 520 between the outer structure 510 and the inner structure 520. The conductive adhesive material may have a lower melting point compared with the first metal material included in the outer structure 510 and the second metal material included in the inner structure 520. The conductive adhesive material may include at least one of, for example, copper (Cu), silver paste, aluminum, silver-aluminum, carbon paste, or CNT paste (e.g., carbon nanotube paste).

According to a certain embodiment, the portion 515 of the outer structure 510 and the portion 525 of the inner structure 520 may be electrically and mechanically connected by using a bolt.

According to an embodiment, the seal member 550 may be positioned in the opening 540 of the non-conductive structure 530. When a gap is generated between the inner structure 520 and the non-conductive structure 530 due to an external impact (e.g., impact due to a fall of the electronic device 200), the seal member 550 may prevent external foreign substances such as water or dust introduced between the rear plate 202 and the side bezel structure 203 from moving into the gap. For example, the seal member550 may be formed by filling the opening 540 with a liquid or paste sealant such as cured-in-place gasket (CIPG) or an adhesive material and solidification thereafter. In a certain embodiment, the seal member 550 may include a heat-reactive material or a photo-reactive material.

According to a certain embodiment, the seal member 550 may include an elastic member or flexible member such as rubber elastically coupled to the opening 540.

According to a certain embodiment, the seal member 550 may be coupled to the non-conductive structure 530 at the opening 540 through various woven structures such as a dovetail joint. Such a woven structure may contribute to preventing the sealing member 550 from being separated from the opening 540 of the non-conductive structure 530.

According to a certain embodiment, when the bonding portion (or joint portion) between the inner structure 520 and the non-conductive structure 530 is implemented to reduce damage against external impact, the seal member 550 may be omitted. For example, an organic adhesive layer may be positioned between the inner structure 520 and the non-conductive structure 530. The inner structure 520 can be firmly and tightly bonded to the non-conductive structure 530 formed by injection molding due to the organic adhesive layer (e.g., tri bonding). The organic adhesive layer may increase bonding strength between the inner structure 520 and the non-conductive structure 530 and may contribute to waterproofing. The organic adhesive layer may include, for example, various polymers or sealants such as triazine thiol, dithio pyrimidine, or silane-based compounds.

According to various embodiments, the second adhesive member 590 may be further expanded without being limited to the illustrated example. For example, the second adhesive member 590 may be expanded between the seal member 550 and the rear plate 202 or between the rear plate 202 and the lateral bezel structure 203.

The electronic device 200 (see FIG. 2) may include, for example, at least one antenna and a wireless communication circuit (e.g., wireless communication module 192 in FIG. 1) electrically connected to the at least one antenna. The wireless communication circuit may be disposed on the first printed circuit board 441. The antenna may include, for example, at least one antenna radiator, a ground, or a transmission line. The at least one antenna radiator may form an electromagnetic field capable of transmitting and/or receiving signals of at least one frequency in a selected or designated frequency band when a radiation current is supplied by the wireless communication circuit. The at least one antenna radiator may include a conductive pattern located or included in the housing 210, or a conductive pattern located inside the electronic device 200 (e.g., laser direct structured (LDS) form, flexible printed circuit board (FPCB) form, form realized by plating or printing, microstrip located on the first printed circuit board 441). The wireless communication circuit may process a transmission signal or a reception signal in at least one designated frequency band through the at least one antenna radiator. The designated frequency band may include, for example, low band (LB, about 600 MHz to about 1 GHz), middle band (MB, about 1 GHz to about 2.3 GHz), high band (HB, about 2.3 GHz to about 2.7 GHz), ultra-high band (UHB, about 2.7 GHz to about 6 GHz), or various other frequency bands. The transmission line electrically connects the wireless communication circuit and the at least one antenna radiator, and may transmit a radio frequency (RF) signal (voltage, current). The transmission line may include, for example, electrical paths implemented with various types of conductive structures or wires connecting the wireless communication circuit and the at least one antenna radiator. The ground (or, antenna ground) may include, for example, a ground (e.g., ground plane) located or included in the first printed circuit board 441. The antenna may include a frequency adjustment circuit (e.g., matching circuit) connected to the transmission line between the at least one antenna radiator and the wireless communication circuit. The frequency adjustment circuit may include an electrical element having components such as inductance, capacitance, or conductance acting on the transmission line.

The outer structure 510 (see FIG. 6 ) may include, for example, a first conductive portion 611, a second conductive portion 612, a third conductive portion 613, a fourth conductive portion 614, and a fifth conductive portion 615, which are disposed in the non-conductive structure 530 and physically separated from each other. The non-conductive structure 530 (see FIG. 6) may include a first insulating portion 621 extended to a cut-off portion between the first conductive portion 611 and the second conductive portion 612, a second insulating portion 622 extended to a cut-off portion between the second conductive portion 612 and the third conductive portion 613, a third insulating portion 623 extended to a cut-off portion between the third conductive portion 613 and the fourth conductive portion 614, a fourth insulating portion 624 extended to a cut-off portion between the fourth conductive portion 614 and the fifth conductive portion 615, and a fifth insulating portion 625 extended to a cut-off portion between the fifth conductive portion 615 and the first conductive portion 611. The first insulating portion 621, the second insulating portion 622, the third insulating portion 623, the fourth insulating portion 624, and the fifth insulating portion 625 may constitute a portion of the side surface 210C (see FIG. 2 ). The shape or number of conductive portions included in the outer structure 510 may vary without being limited to the illustrated example. In an embodiment, at least a portion of the outer structure 510 may be electrically connected to the wireless communication circuit (e.g., wireless communication module 192 in FIG. 1) to operate as an antenna radiator. For example, the cross-sectional structure 500 of FIG. 5 may include a part of the front case 400 indicated by reference symbol 'B' in FIG. 6, and the antenna radiator electrically connected to the wireless communication circuit may include the first conductive portion 611.

According to an embodiment, the flexible conductive member 570 may electrically connect the inner structure 520 and the first printed circuit board 441. For example, the flexible conductive member 570 may include a conductive clip (e.g., conductive member including an elastic structure) and may be disposed on the first printed circuit board 441. As another example, the flexible conductive member 570 may be located in the inner structure 520. The flexible conductive member 570 may be implemented as various other forms not being limited to the illustrated example, such as pogo pin, spring, conductive poron, conductive rubber, conductive tape, or conductive connector. The wireless communication circuit disposed on the first printed circuit board 441 may be electrically connected to the outer structure 510 through the flexible conductive member 570 and the inner structure 520.

According to an embodiment, the inner structure 520 may include a first part 521 electrically connected to the outer structure 510 and the flexible conductive member 570, and a second part 522 physically separated from the first part 521. The first part 521 may include the portion 525 electrically connected to the portion 515 of the outer structure 510 at a position overlapping with (or, aligned with) the opening 540 of the non-conductive structure 530. The flexible conductive member 570 may electrically connect the first part 521 and the first printed circuit board 441. The wireless communication circuit disposed on the first printed circuit board 441 may be electrically connected to the outer structure 510 through the first part 521. The first part 521 and the flexible conductive member 570 may be a part of the transmission line.

According to an embodiment, an oxide layer of a non-conductive material may be formed on the surface of the inner structure 520 not covered by the non-conductive structure 530 or the outer structure 510 by using anodic oxidation or anodizing. An oxide layer of a non-conductive material may be applied to the surface of the inner structure 520 by passing an electric current through an electrolyte solution (e.g., sulfuric acid solution, nitric acid solution). The oxide layer of a non-conductive material is a coating layer for protecting the inner structure 520 from the outside, and may increase surface strength or prevent corrosion of the inner structure 520 for example. In this case, a portion of the oxide layer of a non-conductive material may be removed in correspondence to a region of the first part 521 of the inner structure 520 with which the flexible conductive member 570 comes into physical contact.

According to an embodiment, the second part 522 of the inner structure 520 may be electrically connected to the first printed circuit board 441. The second part 522 may be electrically connected to the ground included in the first printed circuit board 441. Between the second part 522 and the first printed circuit board 441, a flexible conductive member (e.g., C-clip, pogo pin, spring, conductive poron, conductive rubber, conductive tape, or conductive connector) or a conductive adhesive material may be positioned. The second part 522 of the inner structure 520 electrically connected to the ground included in the first printed circuit board 441 may serve as an electromagnetic shielding structure (or, ground structure) for reducing electromagnetic influence (e.g., electromagnetic interference (EMI)) on the components included in the electronic device 200 (see FIG. 2). The second part 522 of the inner structure 520 may reduce, for example, the influence of electromagnetic noise (e.g., EMI) generated inside the electronic device 200 or introduced from the outside of the electronic device 200 on the first printed circuit board 441 and/or the display 301. The second part 522 of the inner structure 520 may reduce electromagnetic interference between, for example, the first printed circuit board 441 and the display 301.

According to an embodiment, a coating layer may be disposed on the surface of the outer structure 510 not covered by the non-conductive structure 530 and the inner structure 520 (e.g., region of the outer structure 510 constituting the side surface 210C). The coating layer may increase surface strength or prevent corrosion of the outer structure 510. The coating layer may improve aesthetics of the outer structure 510. For example, the coating layer may be formed by using plating. As another example, the coating layer may include an oxide layer of a non-conductive material formed through anodic oxidation or anodizing.

According to an embodiment, in the case of surface treatment of the outer structure 510 or the inner structure 520 by use of anodizing, the non-conductive structure 530 may include a material that is not substantially affected by anodizing. For example, the non-conductive structure 530 may include a polymer having heat resistance and acid resistance to anodizing. In a certain embodiment, the surface of the non-conductive structure 530 may be coated using a paint, and this paint may have heat resistance and acid resistance so as not to be substantially affected during anodizing.

According to an embodiment, the non-conductive structure 530 may include a first side border portion 531 extended between the outer structure 510 and the front plate 201 to constitute a portion of the side surface 210C. The first side border portion 531 may be disposed in a ring shape along the edge of the front plate 201. The non-conductive structure 530 may include a second side border portion 532 extended between the outer structure 510 and the rear plate 202 to constitute a portion of the side surface 210C. The second side border portion 532 may be disposed in a ring shape along the edge of the rear plate 202. In a certain embodiment, the first side border portion 531 and/or the second side border portion 532 may be implemented as a different non-conductive structure separated from the non-conductive structure 530, and may be disposed on the outer structure 510. For example, the side border portion (e.g., first side border portion 531 or second side border portion 532) separated from the non-conductive structure 530 may be formed in a form coupled to the outer structure 510 by using insert injection molding. As another example, the side border portion separated from the non-conductive structure 530 may be separately formed and coupled to the outer structure 510. In a certain embodiment, the first side border portion 531 may be formed in a form coupled to the front plate 201 through insert injection molding, or may be formed separately and coupled to the front plate 201. In a certain embodiment, the second side border portion 532 may be formed in a form coupled to the rear plate 202 through insert injection molding, or may be formed separately and coupled to the rear plate 202. In a certain embodiment, the first side border portion 531 or the second side border portion 532 may be omitted, and the outer structure 510 may be expanded correspondingly.

According to an embodiment, the current carrying structure shown in FIG. 5 may be applied to a portion indicated by reference symbol 'C', 'D' or 'E' in FIG. 6. According to the above current carrying structure, the first printed circuit board 441 may be electrically connected to the outer structure 510 through the first part 521 of the inner structure 520, and the first part 521 of the inner structure 520 and the outer structure 510 may be electrically connected at a position overlapping with (or, aligned with) the opening 540 of the non-conductive structure 530. For example, due to the current carrying structure applied to the portion indicated by reference symbol 'C', the first conductive portion 611 of the outer structure 510 may be electrically connected to the wireless communication circuit or ground disposed on the first printed circuit board 441. For example, due to one of the current carrying structure applied to the portion indicated by reference symbol 'D' and the current carrying structure applied to the portion indicated by reference symbol 'E', the second conductive portion 612 of the outer structure 510 may be electrically connected to the wireless communication circuit disposed on the first printed circuit board 441 to operate as an antenna radiator. Due to the other of the current carrying structure applied to the portion indicated by reference symbol 'D' and the current carrying structure applied to the portion indicated by reference symbol 'E', the second conductive portion 612 of the outer structure 510 may be electrically connected to the ground disposed on the first printed circuit board 441. The position or number of current carrying structures presented in FIG. 5 may vary without being limited to the illustrated example.

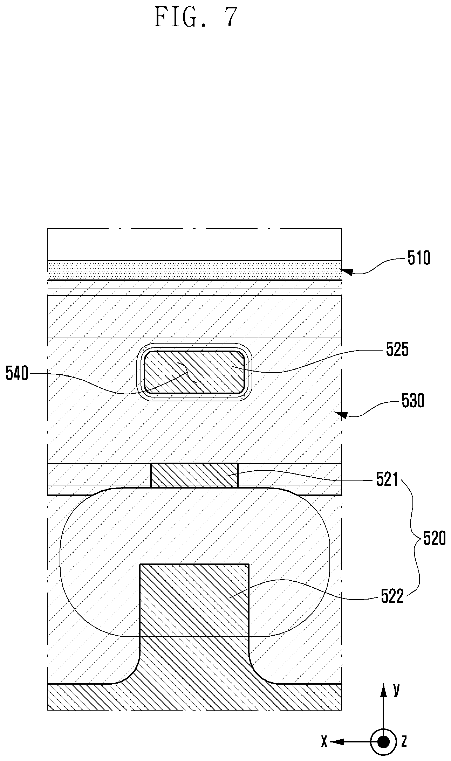

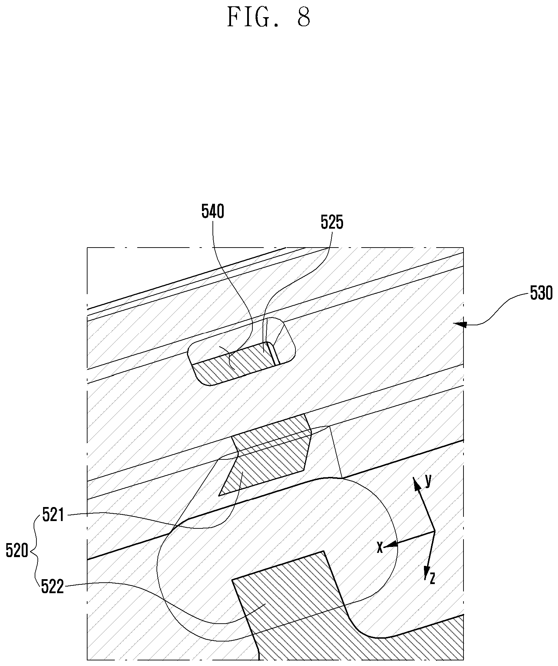

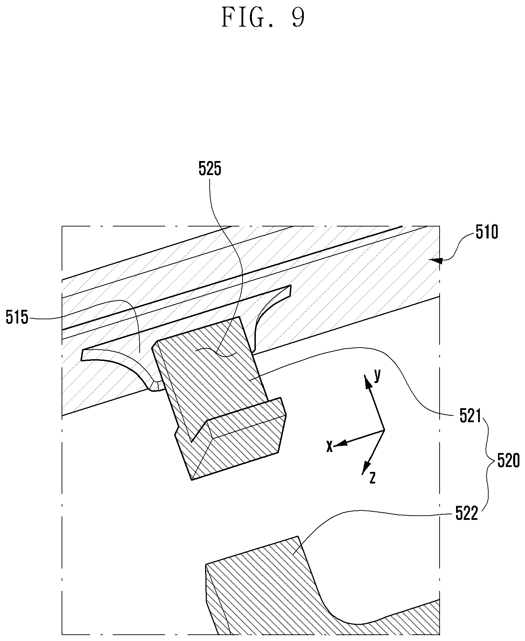

FIG. 7 is an enlarged view of a portion indicated by reference symbol 'B', 'C', 'D' or 'E' in FIG. 6, for example. FIG. 8 is a perspective view of the portion indicated by reference symbol 'B', 'C', 'D' or 'E' in FIG. 6, for example. FIG. 9 shows the outer structure 510 and the inner structure 520 at the portion indicated by reference symbol 'B', 'C', 'D' or 'E' in FIG. 6, for example.

With reference to FIGS. 6, 7, 8 and 9, the inner structure 520 may include a first part 521 and a second part 522 that are physically separated. The portion 525 of the first part 521 and the portion 515 of the outer structure 510 may overlap in alignment with the opening 540 of the non-conductive structure 530, and may be electrically connected. The portion 525 of the first part 521 is a portion that receives heat directly from the welding equipment and may be exposed through the opening 540 of the non-conductive structure 530. The opening 540 of the non-conductive structure 530 may contribute to facilitating access of the welding equipment in an operation of electrically and mechanically connecting the portion 525 of the first part 521 and the portion 515 of the outer structure 510, and to forming a firm weld zone 560 (see FIG. 5). Depending on the location where the welding equipment applies heat to the portion 525 of the first part 521 exposed through the opening 540 of the non-conductive structure 530, the shape of the weld zone 560 based on the welding point between the outer structure 510 and the first part 521 may vary. In the illustrated example, the opening 540 is formed in the non-conductive structure 530, and the inner surface of the opening 540 may be formed as a non-conductive surface. In a certain embodiment, without being limited to the illustrated example, the opening 540 may be formed by at least some of the outer structure 510, the inner structure 520, or the non-conductive structure 530 or may be formed by a combination thereof, and the outer structure 510, the inner structure 520, or the non-conductive structure 530 may be deformed into a shape different from the illustrated example. In this case, at least a portion of the inner surface of the opening 540 may be formed by at least some of the first part 521, the second part 522, or the outer structure 510, or may be formed by a combination thereof. For example, the first part 521 may be expanded to include the opening 540. As another example, the outer structure 510 may be expanded to include the opening 540, and in this case, the portion 515 of the outer structure 510 may be positioned between the opening 540 and the portion 525 of the first part 521.

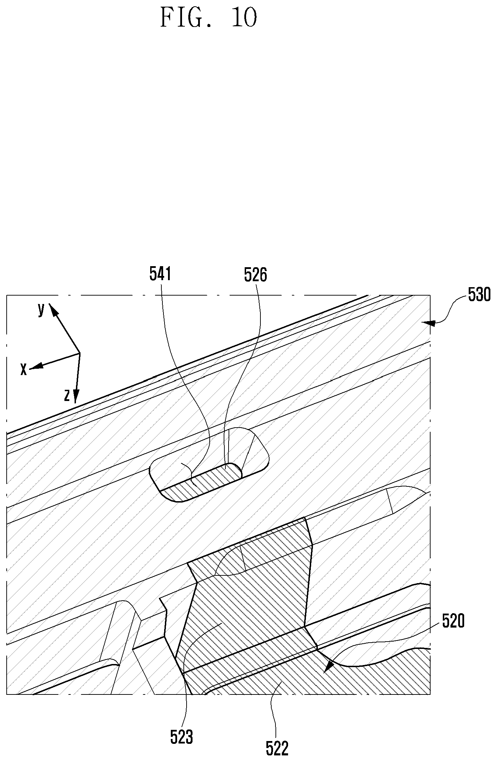

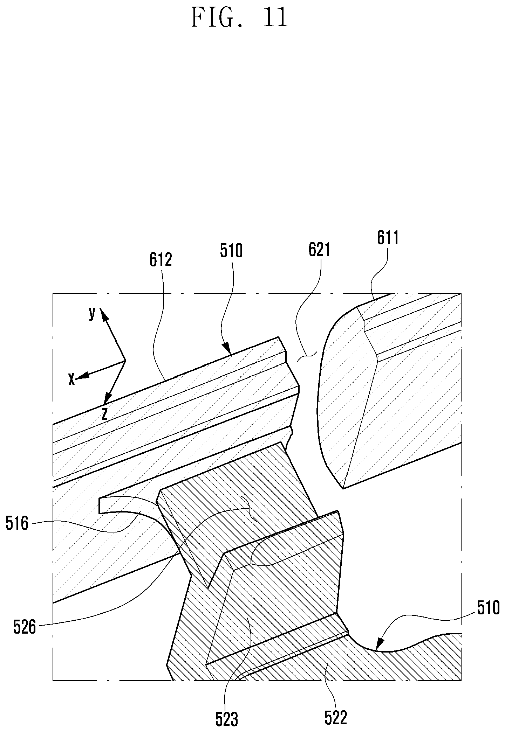

FIG. 10 is a perspective view of a portion indicated by reference symbol 'F' in FIG. 6, for example. FIG. 11 shows the outer structure 510 and the inner structure 520 at the portion indicated by reference symbol 'F' in FIG. 6, for example.

With reference to FIGS. 6, 10 and 11, in an embodiment, the inner structure 520 may include a third part 523 extended from the second part 522. The portion 516 of the outer structure 510 and the portion 526 of the third part 523 may overlap in alignment with the opening 541 of the non-conductive structure 530. In an embodiment, the portion 526 of the third part 523 may be inserted into a hole (e.g., side hole) (not shown) formed in the non-conductive structure 530, and the hole may be connected to the opening 541. The portion 516 of the outer structure 510 and the portion 526 of the third part 523 may be electrically and mechanically connected at a position overlapping with (or, aligned with) the opening 541 by using welding. The mechanical connection of the outer structure 510 and the inner structure 520 may constitute an integral structure, which can contribute to durability or rigidity (e.g., torsional rigidity) of the front case 400 (see FIG. 6). The current carrying structure between the outer structure 510 and the inner structure 520 may be applied to the portion indicated by reference symbol 'G' in FIG. 6. The position or number of current carrying structures between the outer structure 510 and the inner structure 520 presented in FIG. 10 may vary without being limited to the illustrated example. In various embodiments, the front case 400 may include a seal member positioned at the opening 541. When a gap is generated between the inner structure 520 and the non-conductive structure 530 due to an external impact (e.g., impact due to a fall of the electronic device 200), the seal member (e.g., seal member 550 in FIG. 5) may prevent foreign substances such as water or dust from moving into the gap.

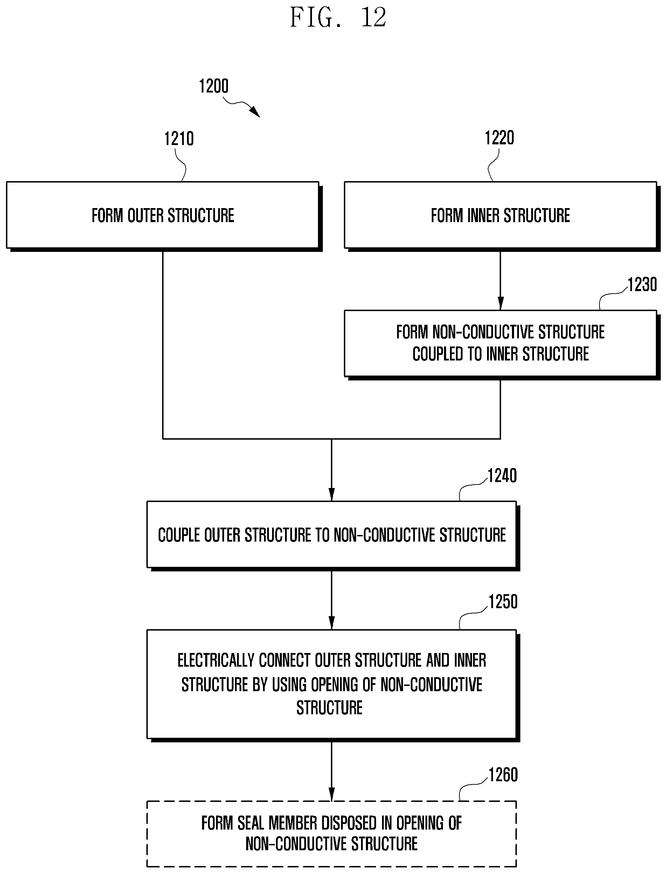

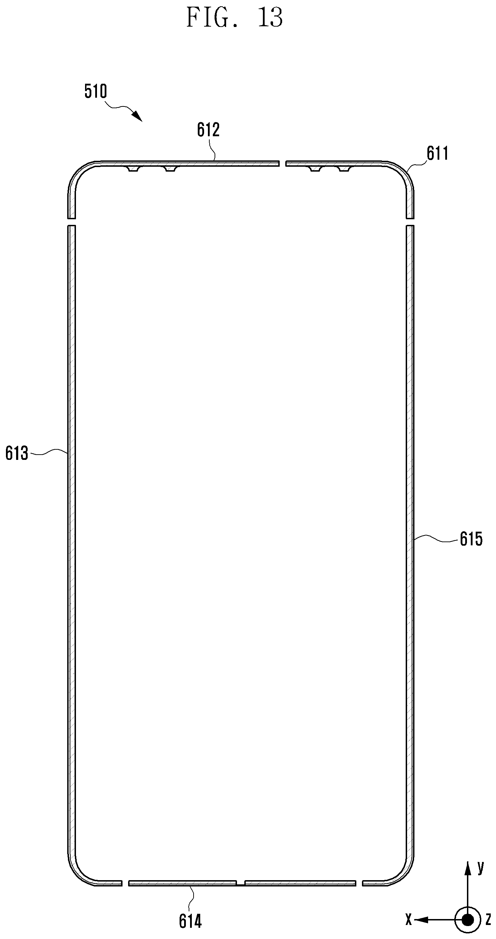

FIG. 12 illustrates a manufacturing flow 1200 of the front case 400 in FIG. 4 according to an embodiment. FIGS. 13, 14, 15, 16, 17, 18, 19A and 19B are reference drawings for explaining the manufacturing flow 1200 of FIG. 12, for example.

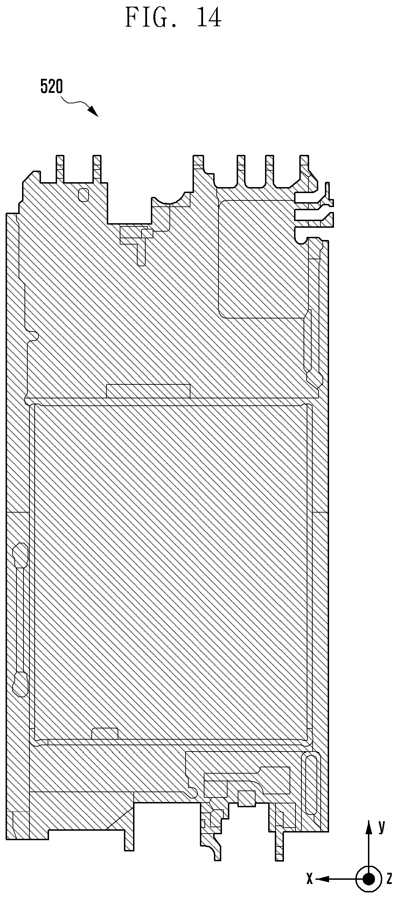

With reference to FIGS. 12 and 13, at operation 1210, an outer structure 510 may be formed. The outer structure 510 may include, for example, at least one of a first conductive portion 611, a second conductive portion 612, a third conductive portion 613, a fourth conductive portion 614, or a fifth conductive portion 615. In the illustrated example, the outer structure 510 includes a plurality of conductive portions 611, 612, 613, 614 and 615 that are physically separated from each other, but without being limited thereto, the outer structure 510 may be implemented in an integral form without a cut-off portion or having one cut-off portion. With reference to FIGS. 12 and 14, at operation 1220, an inner structure 520 may be formed. The outer structure 510 may include a first metal material, and the inner structure 520 may include a second metal material different from the first metal material. For operation 1210 or operation 1220, various treatment methods such as CNC, die casting, or pressing may be used.

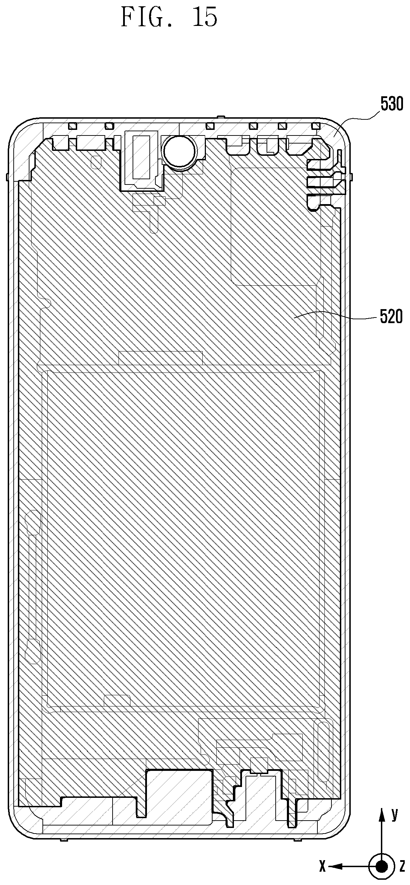

With reference to FIGS. 12 and 15, at operation 1230, a non-conductive structure 530 coupled to the inner structure 520 may be formed. For operation 1230, insert injection molding may be used, for example. In a certain embodiment, an organic adhesive layer may be positioned between the inner structure 520 and the non-conductive structure 530. The inner structure 520 may be firmly and tightly bonded to the non-conductive structure 530 formed by injection molding due to the organic adhesive layer.

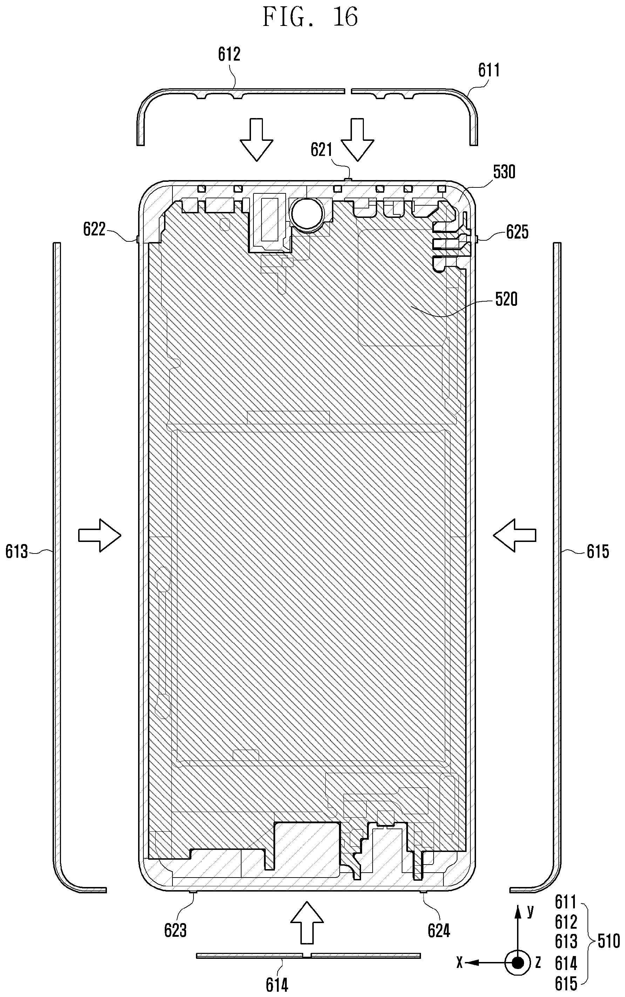

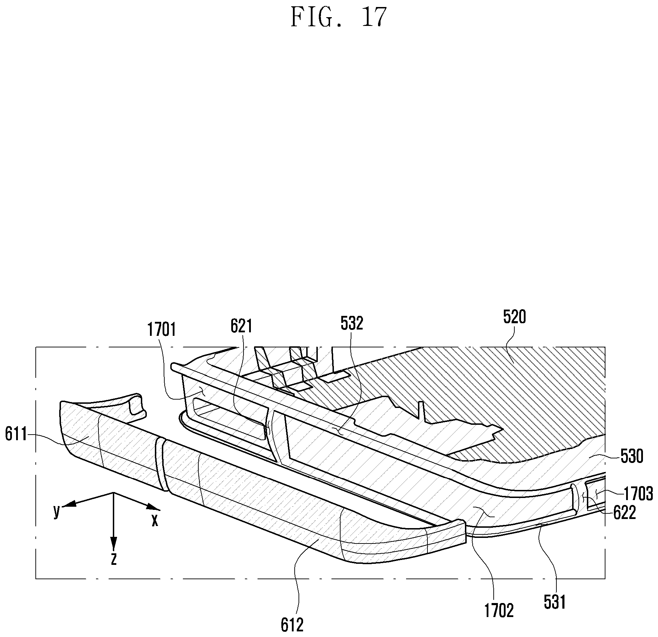

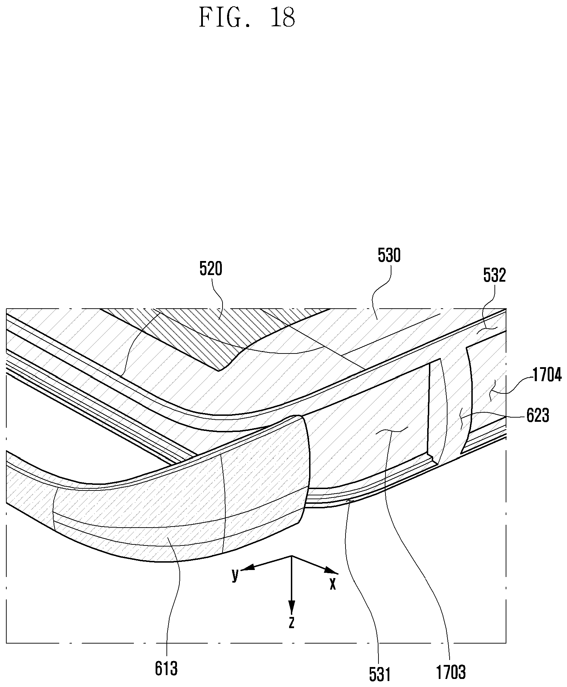

With reference to FIGS. 12 and 16, at operation 1240, the outer structure 510 may be coupled to the non-conductive structure 530. The non-conductive structure 530 may include a first insulating portion 621, a second insulating portion 622, a third insulating portion 623, a fourth insulating portion 624, and a fifth insulating portion 625, each of which is extended to the cut-off portion between two adjacent conductive portions of the outer structure 510. An adhesive material of various polymers or a sealant may be positioned between the outer structure 510 and the non-conductive structure 530. FIG. 17 illustrates the first conductive portion 611, the second conductive portion 612, the inner structure 520, and the non-conductive structure 530 in an embodiment. FIG. 18 illustrates the third conductive portion 613, the inner structure 520, and the non-conductive structure 530 in an embodiment. With reference to FIGS. 17 and 18, the non-conductive structure 530 may include a first recess 1701 into which the first conductive portion 611 can be fitted, a second recess 1702 into which the second conductive portion 612 can be fitted, and a third recess 1703 into which the third conductive portion 613 can be fitted. The non-conductive structure 530 may include a fourth recess 1704 into which the fourth conductive portion 614 (see FIG. 16) can be fitted. Although not shown, the non-conductive structure 530 may include a fifth recess into which the fifth conductive portion 615 (see FIG. 16) can be fitted. The non-conductive structure 530 may include a ring-shaped first side border portion 531 that is extended between the outer structure 510 and the front plate 201 (see FIG. 5) to constitute a portion of the side surface 210C (see FIG. 5). The non-conductive structure 530 may include a ring-shaped second side border portion 532 that is extended between the outer structure 510 and the rear plate 202 (see FIG. 5) to constitute a portion of the side surface 210C (see FIG. 5).

According to a certain embodiment, the first side border portion 531 and/or the second side border portion 532 may be disposed on the outer structure 510 as a different non-conductive structure separated from the non-conductive structure 530. Compared to an example in which the non-conductive structure 530 includes a side border portion (see FIG. 5), an example of disposing a side border portion (e.g., first side border portion 531, second side border portion 532) separated from the non-conductive structure 530 on the outer structure 510 can reduce appearance defects that may cause the side surface 210C (see FIG. 5 ) not to be smooth due to a positional deviation (or positional tolerance) between the outer structure 510 and the non-conductive structure 530.

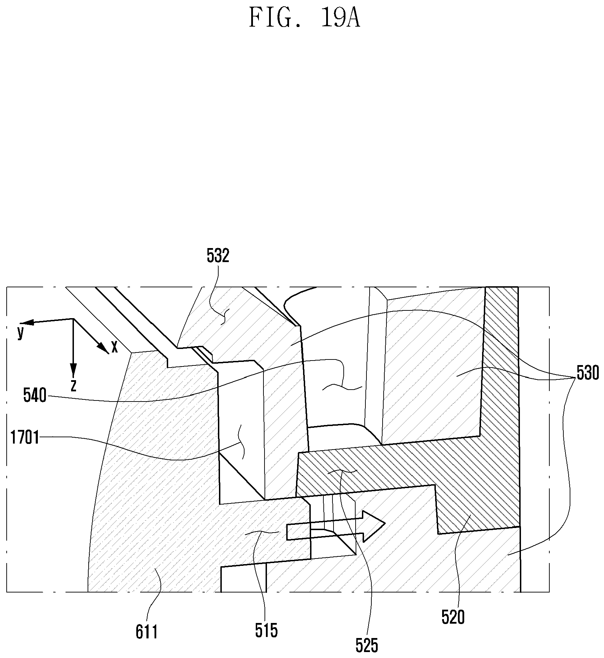

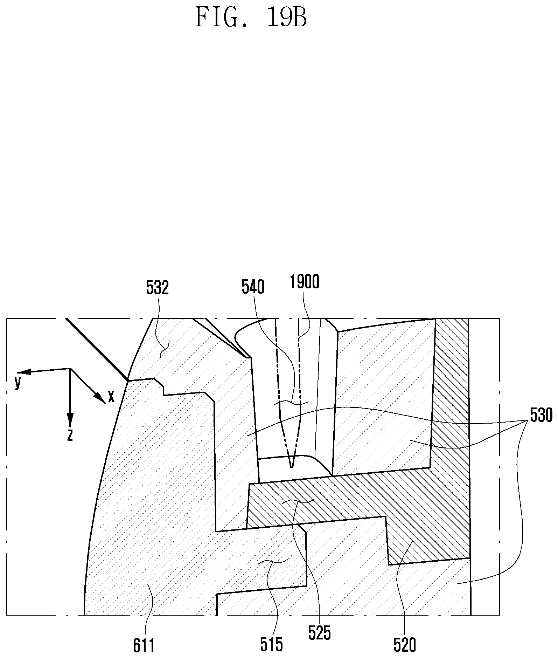

According to an embodiment, at operation 1250, the outer structure 510 and the inner structure 520 may be electrically connected by using the opening of the non-conductive structure 530. With reference to FIGS. 19A and 19B, for example, the non-conductive structure 530 may include an opening 540 overlapping with a portion 525 of the inner structure 520 (e.g., first part 521 in FIG. 5), and the portion 525 of the inner structure 520 may be exposed through the opening 540. The first conductive portion 611 may be fitted into the first recess 1701 of the non-conductive structure 530. A portion 515 of the first conductive portion 611 may face the portion 525 of the inner structure 525, and the portion 515 of the first conductive portion 611 and the portion 525 of the inner structure 525 may overlap each other in alignment with the opening 540. A welding equipment 1900 can be inserted into the opening 540 to apply heat to the portion 525 of the inner structure 520, and the boundary between the portion 525 of the inner structure 520 and the portion 515 of the first conductive portion 611 may be melted to form electrical and mechanical connections. Although not shown, the second conductive portion 612, the third conductive portion 613, the fourth conductive portion 614, or the fifth conductive portion 615 shown in FIG. 16 may be electrically and mechanically connected to the inner structure 520 in a manner substantially identical to the current carrying structure shown in FIG. 19B.

According to an embodiment, at operation 1260, a seal member (e.g., seal member 550 in FIG. 5) disposed in the opening (e.g., opening 540 in FIG. 5 or 19B) of the non-conductive structure 530 may be formed. In a certain embodiment, the front case 400 may be implemented without a seal member disposed in the opening, in which case operation 1260 may be skipped.

According to various embodiments, the manufacturing flow 1200 of FIG. 12 may further include an operation related to outer shape processing, an operation related to surface treatment such as coating or anodizing, or various other processing operations. For example, the manufacturing flow 1200 of FIG. 12 may further include an operation of forming an oxide layer of a non-conductive material by applying anodic oxidation or anodizing to the surface of the inner structure 520. The manufacturing flow 1200 of FIG. 12 may further include an operation of removing a portion of the oxide layer of a non-conductive material in correspondence to the region of the first part 521 (see FIG. 5) of the inner structure 520 with which the flexible conductive member 570 (see FIG. 5) comes into physical contact. For example, the manufacturing flow 1200 of FIG. 12 may further include an operation of forming a coating layer on the surface of the outer structure 510 (e.g., region of the outer structure 510 constituting the side surface 210C). For example, the coating layer may be formed by using plating. As another example, the coating layer may include an oxide layer of a non-conductive material formed through anodic oxidation or anodizing. In a certain embodiment, the outer structure formed at operation 1210 may require outer shape processing and may be provided in a form different from the outer structure 510 shown in FIG. 13, in which case operation 1210 may be differently referred to as an operation of forming a first metal structure, a first metal part, an outer metal structure, or an outer metal part. In a certain embodiment, the inner structure formed at operation 1220 may require outer shape processing and may be provided in a form different from the inner structure 520 shown in FIG. 14, in which case operation 1220 may be differently referred to as an operation of forming a second metal structure, a second metal part, an inner metal structure, or an inner metal part. For example, with reference to FIG. 5, outer shape processing may be performed to separate the first part 521 and the second part 522 of the inner structure 520. In a certain embodiment, the non-conductive structure formed at operation 1320 may require outer shape processing and may be provided in a form different from the non-conductive structure 530 shown in FIG. 15, in which case operation 1230 may be differently referred to as an operation of forming a non-metal structure or a non-metal part.

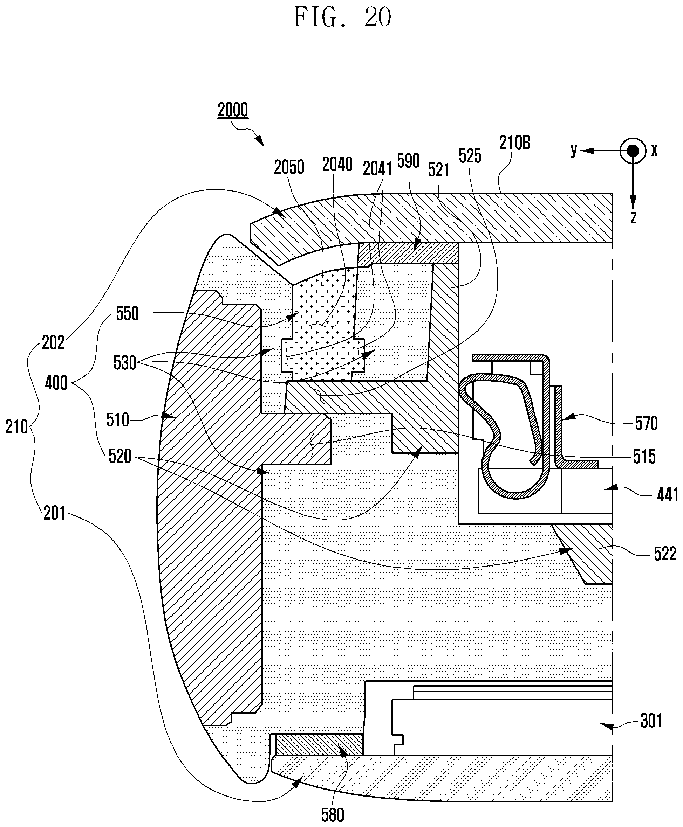

FIG. 20 shows a cross-sectional structure 2000 of a y-z plane for line A-A' in FIG. 3 in another embodiment.

With reference to FIG. 20, the cross-sectional structure 2000 may include a housing 210, a display 301, a first printed circuit board 441, a flexible conductive member 570, a first adhesive member 580, and/or a second adhesive member 590. The housing 210 may include a front plate 201, a rear plate 202, and a front case 400. The front case 400 may include an outer structure 510, an inner structure 520, a non-conductive structure 530, or a seal member 2050.

According to an embodiment, the seal member 2050 may be coupled to the non-conductive structure 530 in a woven structure like a dovetail joint in the opening 2040 of the non-conductive structure 530. For example, the seal member 2050 may include a protrusion (e.g., locking portion such as a hook (not shown)), and the opening 2040 of the non-conductive structure 530 may include a shape (e.g., undercut structure 2041) corresponding to the protrusion of the seal member 2050. The woven structure may contribute to preventing the seal member 550 from being separated from the opening 540 of the non-conductive structure 530. For example, the non-conductive structure 530 may be implemented to include an opening 2040 having the undercut structure 2041 by using insert injection molding. As another example, after insert injection molding, outer shape processing may be performed for the undercut structure 2041. For example, the seal member 2050 may be formed by filling the opening 2040 with a liquid or paste sealant such as CIPG or adhesive material and solidification thereafter. As another example, the seal member 2050 may be fabricated in a form including a protrusion corresponding to the undercut structure 2041 and then coupled to the opening 2040. In this case, the seal member 2050 may include an elastic member or flexible member such as rubber elastically coupled to the opening 2040.

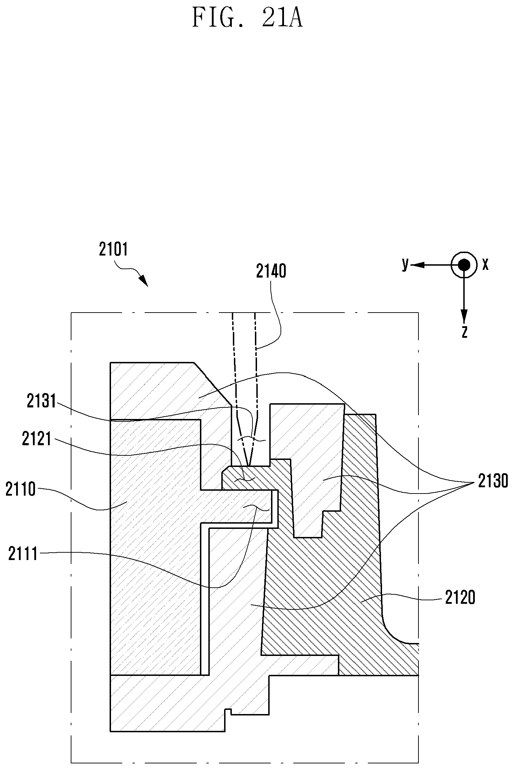

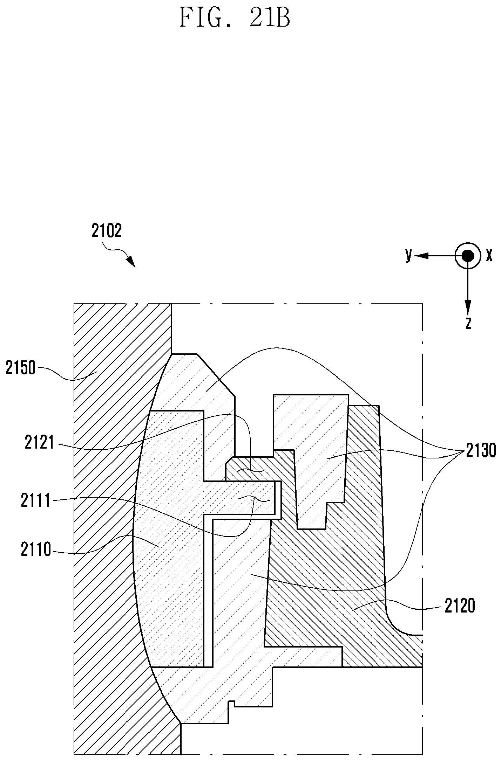

FIGS. 21A and 21B illustrate cross-sectional structures for explaining the manufacturing flow of the front case 400 in FIG. 4 in another embodiment.

With reference to FIG. 21A, an outer metal part 2110 for the outer structure 510 in FIG. 6, an inner metal part 2120 for the inner structure 520 in FIG. 6, and a non-metal part 2130 for the non-conductive structure 530 in FIG. 6 can be combined to form a first structure 2101. A portion 2111 of the outer metal part 2110 and a portion 2121 of the inner metal part 2120 may overlap at a position aligned with the opening 2131 of the non-metal part 2130, and may be electrically and mechanically connected by using a welding equipment 2140.

With reference to FIGS. 21A and 21B, a second structure 2102 may be formed by cutting the outer metal part 2110 and the non-metal part 2130 of the first structure 2101 in a form having the side surface (e.g., side surface 210C in FIG. 2) of the electronic device 200 by using an outer shape processing equipment 2150. Compared to the method in which the outer structure 510 is coupled to the non-conductive structure 530 according to the example of FIG. 5, the example of FIGS. 21A and 21B can reduce appearance defects that may cause the side surface 210C not to be smooth due to a positional deviation (or positional tolerance) between the outer structure 510 and the non-conductive structure 530. In a certain embodiment, after outer shape processing of the outer metal part 2110 and the non-metal part 2130 of the first structure 2101, the outer metal part 2110 and the inner metal part 2120 may be welded.

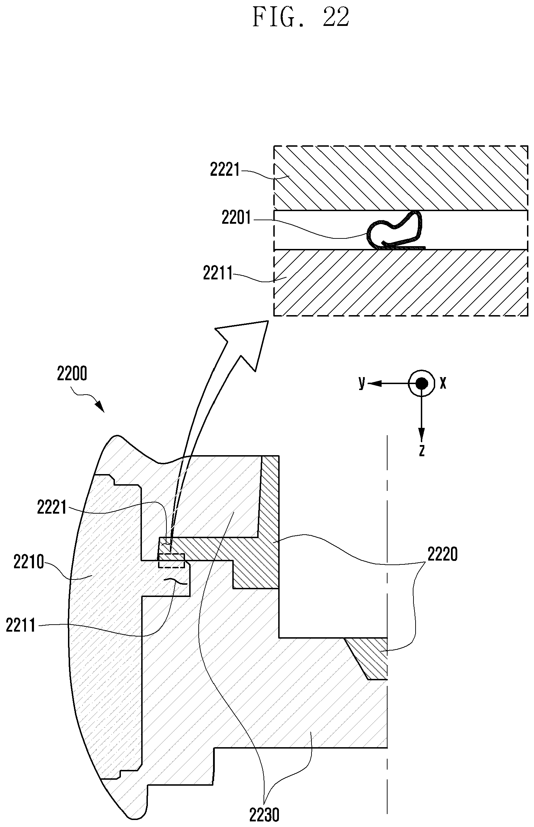

FIG. 22 shows a cross-sectional structure 2200 of a part of the front case 400 in FIG. 4 in another embodiment.

With reference to FIG. 22, the cross-sectional structure 2200 may include an outer structure 2210 (e.g., outer structure 510 in FIG. 5), an inner structure 2220 (e.g., inner structure 520 in FIG. 5), a non-conductive structure 2230, and a flexible conductive member 2201. In an embodiment, the flexible conductive member 2201 may, in place of the weld zone 560 in FIG. 5, be positioned between a portion 2211 of the outer structure 2210 and the inner structure 2221. In this case, compared to the non-conductive structure 530 according to the example of FIG. 5, the non-conductive structure 2230 may be implemented without an opening. The flexible conductive member 2201 is not limited to the illustrated conductive clip (e.g., conductive member including an elastic structure), and may include various other forms such as pogo pin, spring, conductive poron, conductive rubber, conductive tape, or conductive connector. In a certain embodiment, a conductive adhesive material may replace the flexible conductive member 2201.

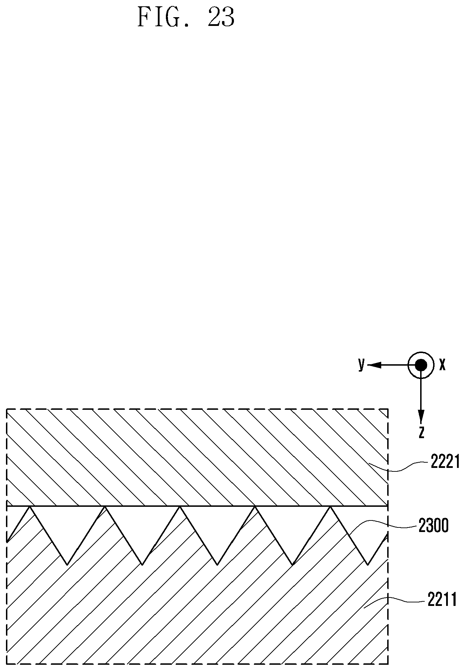

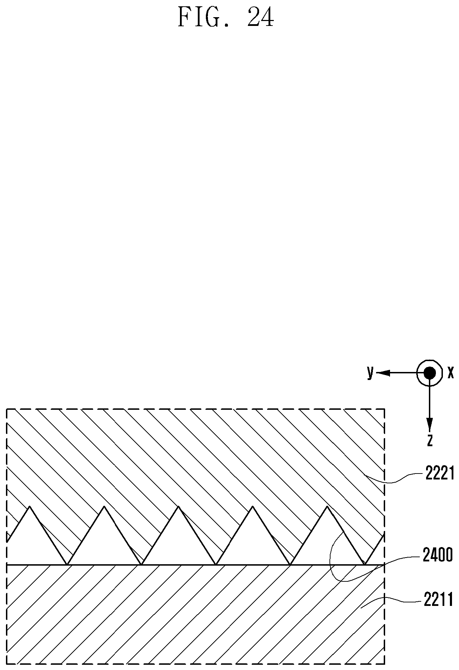

FIG. 23 or 24 shows a cross-sectional structure of ultrasonic welding between the outer structure 2210 and the inner structure 2220 as another embodiment modified from the example of FIG. 22.

With reference to FIG. 22, for example, a part 2211 of the outer structure 2210 may include an uneven portion 2300 facing a part 2221 of the inner structure 2220. When ultrasonic vibration is applied, frictional heat between the uneven portion 2300 of the outer structure 2210 and the part 2221 of the inner structure 2220 may cause the part 2211 of the outer structure 2210 and the part 2221 of the inner structure 2220 to be electrically and mechanically connected. The uneven portion 2300 may contribute to forming a firm weld zone.

As another example, with reference to FIG. 24, a part 2221 of the inner structure 2220 may include an uneven portion 2400 facing a part 2211 of the outer structure 2210. When ultrasonic vibration is applied, frictional heat between the part 2211 of the outer structure 2210 and the uneven portion 2400 of the inner structure 2220 may cause the part 2211 of the outer structure 2210 and the part 2211 of the inner structure 2220 to be electrically and mechanically connected. The uneven portion 2400 may contribute to forming a firm weld zone. In a certain embodiment, the uneven portion may be formed in both the part 2211 of the outer structure 2210 and the part 2221 of the inner structure 2220.

According to an embodiment of this document, an electronic device (e.g., electronic device 200 in FIG. 2) may include a housing (e.g., housing 210 in FIG. 5). The housing may include a front surface (e.g., front surface 210A in FIG. 5) of the electronic device, a rear surface (e.g., rear surface 210B in FIG. 5) of the electronic device, and a side surface (e.g., side surface 210C in FIG. 5) that at least partially surrounds the space between the front surface and the rear surface. The electronic device may include a display (e.g., display 301 in FIG. 5) positioned in the space, and at least some of the display may be seen through the front surface. The housing may include an outer structure (e.g., outer structure 510 in FIG. 5 constituting at least a portion of the side surface, and the outer structure may include a first metal material. The housing may include an inner structure (e.g., inner structure 520 in FIG. 5) positioned in the space, and the inner structure may include a second metal material different from the first metal material. The housing may include a non-conductive structure (e.g., non-conductive structure 530 in FIG. 5) connected to the outer structure and the inner structure, and may include a polymer. The outer structure and the inner structure may be electrically connected at a position overlapping with an opening (e.g., opening 540 in FIG. 5) formed in the non-conductive structure.

According to an embodiment of this document, the electronic device may further include a seal member (e.g., sealing member 550 in FIG. 5) positioned in the opening (e.g., opening 540 in FIG. 5).

According to an embodiment of this document, a portion (e.g., reference numeral 515 in FIG. 5) of the outer structure and a portion (e.g., reference numeral 525 in FIG. 5) of the inner structure may overlap in alignment with the opening (e.g., opening 540 in FIG. 5) and may be electrically connected.

According to an embodiment of this document, the outer structure (e.g., outer structure 510 in FIG. 5) and the inner structure (e.g., inner structure 520 in FIG. 5) may be electrically connected by using welding at a position overlapping with the opening (e.g., opening 540 in FIG. 5).

According to an embodiment of this document, the seal member (e.g., seal member 2050 in FIG. 20) may be coupled to the non-conductive structure (e.g., non-conductive structure 530 in FIG. 20) through a dovetail joint in the opening (e.g., opening 2040 in FIG. 20).

According to an embodiment of this document, the electronic device (e.g., electronic device 200 in FIG. 2) may further include a wireless communication circuit (e.g., wireless communication module 192 in FIG. 1) electrically connected to the outer structure (e.g., outer structure 510 in FIG. 5) through the inner structure (e.g., inner structure 520 in FIG. 5).

According to an embodiment of this document, the inner structure (e.g., inner structure 520 in FIG. 5) may include a first part (e.g., first part 521 in FIG. 5) electrically connected to the outer structure (e.g., outer structure 510 in FIG. 5), and a second part (e.g., second part 522 in FIG. 5) physically separated from the first part.

According to an embodiment of this document, the electronic device (e.g., electronic device 200 in FIG. 2) may include a wireless communication circuit (e.g., wireless communication module 192 in FIG. 1) electrically connected to the outer structure (e.g., outer structure 510 in FIG. 5) through the first part (e.g., first part 521 in FIG. 5).

According to an embodiment of this document, the electronic device (e.g., electronic device 200 in FIG. 2) may further include a printed circuit board (e.g., first printed circuit board 441 in FIG. 5) positioned in the space, and the wireless communication circuit (e.g., wireless communication module 192 in FIG. 1) may be disposed on the printed circuit board. The electronic device may further include a flexible conductive member (e.g., flexible conductive member 570 in FIG. 5) electrically connecting the first part (e.g., first part 521 in FIG. 5) and the printed circuit board (e.g., first printed circuit board 441 in FIG. 5).

According to an embodiment of this document, the housing (e.g., housing 210 in FIG. 5) may include a front plate (e.g., front plate 201 in FIG. 5) constituting the front surface, and a rear plate (e.g., rear plate 202 in FIG. 5) constituting the rear surface. The non-conductive structure (e.g., non-conductive structure 530 in FIG. 5) may be extended between the outer structure (e.g., outer structure 510 in FIG. 5) and the front plate or between the outer structure and the rear plate to constitute a portion of the side surface (e.g., side surface 210C in FIG. 5) (e.g., see first side border portion 531 or second side border portion 532 in FIG. 5).

According to another embodiment of this document, the housing may include a front plate constituting the front surface and a rear plate constituting the rear surface. The housing may further include another non-conductive structure that is extended between the outer structure and the front plate or between the outer structure and the rear plate to constitute a portion of the side surface and is disposed on the outer structure.

According to an embodiment of this document, the non-conductive structure (e.g., non-conductive structure 530 in FIG. 5) may be disposed on the inner structure (e.g., inner structure 520 in FIG. 5) by using insert injection molding.

According to an embodiment of this document, the electronic device (e.g., electronic device 200 in FIG. 2) may further include a sealant positioned at least partially between the inner structure (e.g., inner structure 520 in FIG. 5) and the non-conductive structure (e.g., non-conductive structure 530 in FIG. 5).

According to an embodiment of this document, the electronic device (e.g., electronic device 200 in FIG. 2) may further include a sealant positioned at least partially between the outer structure (e.g., outer structure 510 in FIG. 5) and the non-conductive structure (e.g., non-conductive structure 530 in FIG. 5).

According to an embodiment of this document, the first metal material or the second metal material may include magnesium, magnesium alloy, aluminum, aluminum alloy, zinc alloy, or copper alloy.

According to an embodiment of this document, the first metal material may include titanium, amorphous alloy, metal-ceramic composite material, or stainless steel.

According to an embodiment of this document, a method for manufacturing a housing of an electronic device (e.g., manufacturing flow 1200 in FIG. 12) may include: forming an outer structure including a first metal material (e.g., operation 1210 in FIG. 12); forming an inner structure including a second metal material different from the first metal material (e.g., operation 1220 in FIG. 12); forming a non-conductive structure including a polymer and coupled to the inner structure (e.g., operation 1230 in FIG. 12); coupling the outer structure to the non-conductive structure (e.g., operation 1240 in FIG. 12); and electrically connecting the outer structure and the inner structure at a position overlapping with an opening formed in the non-conductive structure (e.g., operation 1250 in FIG. 12).

According to an embodiment of this document, a portion (e.g., reference numeral 515 in FIG. 5) of the outer structure and a portion (e.g., reference numeral 525 in FIG. 5) of the inner structure may overlap in alignment with the opening (e.g., opening 540 in FIG. 5) and may be electrically connected.

According to an embodiment of this document, the outer structure and the inner structure may be electrically connected through welding at a position overlapping with the opening.

According to an embodiment of this document, the method for manufacturing a housing may further include forming a seal member (e.g., seal member 550 in FIG. 5) disposed in the opening (e.g., operation 1260 in FIG. 12).

## Claims

1. An electronic device (200) comprising:
a housing (210) that includes a front surface (210A) of the electronic device (200), a rear surface (210B) of the electronic device (200), and a side surface (210C) at least partially surrounding a space between the front surface (210A) and the rear surface (210B); and
a display (301) positioned in the space and at least partially viewed through the front surface (210A),
wherein the housing (210) includes:
an outer structure (510) including a first metal material and constituting at least a portion of the side surface (210C);
an inner structure (520) including a second metal material different from the first metal material and positioned in the space; and
a non-conductive structure (530) including a polymer and connected to the outer structure (510) and the inner structure (520),
wherein the outer structure (510) and the inner structure (520) are electrically connected at a position overlapping with an opening (540, 2040) formed in the non-conductive structure (530).

2. The electronic device (200) of claim 1, further comprising a seal member (550, 2050) positioned in the opening (540, 2040).

3. The electronic device (200) of claim 1 or 2, wherein a portion (515) of the outer structure (510) and a portion (525) of the inner structure (520) overlap in alignment with the opening (540, 2040) and are electrically connected.

4. The electronic device (200) of any one of the preceding claims, wherein the outer structure (510) and the inner structure (520) are electrically connected through welding at a position overlapping with the opening (540, 2040).

5. The electronic device (200) of claim 2, wherein the seal member (2050) is coupled to the non-conductive structure (530) through a dovetail joint in the opening (2040).

6. The electronic device (200) of any one of the preceding claims, further comprising a wireless communication circuit (192) electrically connected to the outer structure (510) through the inner structure (520).

7. The electronic device (200) of any one of the preceding claims, wherein:
the electronic device (200) further comprises a wireless communication circuit (192);
the inner structure (520) includes a first part (521) electrically connected to the outer structure (510), and a second part (522) physically separated from the first part (521); and
the wireless communication circuit (192) is electrically connected to the outer structure (510) through the first part (521).

8. The electronic device (200) of any one of the preceding claims, wherein:
the housing (210) includes a front plate (201) constituting the front surface (210A), and a rear plate (202) constituting the rear surface (210B); and
the non-conductive structure (530) is extended between the outer structure (510) and the front plate (201) or between the outer structure (510) and the rear plate (202) to constitute a portion of the side surface (210C).

9. The electronic device (200) of any one of the preceding claims, wherein the housing (210) further includes:
a front plate constituting the front surface, and a rear plate constituting the rear surface; and
another non-conductive structure that is extended between the outer structure and the front plate or between the outer structure and the rear plate to constitute a portion of the side surface and is disposed on the outer structure.

10. The electronic device (200) of any one of the preceding claims, wherein the non-conductive structure (530) is disposed on the inner structure (520) by using insert injection molding.

11. The electronic device (200) of any one of the preceding claims, further comprising a sealant positioned at least partially between the inner structure (520) and the non-conductive structure (530).

12. A method for manufacturing a housing of an electronic device (200), the method comprising:
forming (1210) an outer structure (510) including a first metal material;
forming (1220) an inner structure (520) including a second metal material different from the first metal material;
forming (1230) a non-conductive structure (530) including a polymer and coupled to the inner structure (520);
coupling (1240) the outer structure (510) to the non-conductive structure (530); and
electrically connecting (1250) the outer structure (510) and the inner structure (520) at a position overlapping with an opening (540, 2040) formed in the non-conductive structure (530).

13. The method of claim 12, wherein a portion (515) of the outer structure (510) and a portion (525) of the inner structure (520) overlap in alignment with the opening (540, 2040) and are electrically connected.

14. The method of claim 12 or 13, wherein the outer structure (510) and the inner structure (520) are electrically connected through welding at a position overlapping with the opening (540, 2040).

15. The method of any one of claims 12 to 14, further comprising forming a seal member (550, 2050) disposed in the opening (540, 2040).

## Patentansprüche

1. Elektronische Vorrichtung (200), umfassend:
ein Gehäuse (210), das eine vordere Fläche (210A) der elektronischen Vorrichtung (200), eine hintere Fläche (210B) der elektronischen Vorrichtung (200) und eine Seitenfläche (210C) beinhaltet, die zumindest teilweise einen Raum zwischen der vorderen Fläche (210A) und der hinteren Fläche (210B) umgibt; und
eine Anzeige (301), die in dem Raum positioniert und zumindest teilweise durch die vordere Fläche (210A) sichtbar ist,
wobei das Gehäuse (210) Folgendes beinhaltet:
eine äußere Struktur (510), die ein erstes Metallmaterial beinhaltet und mindestens einen Abschnitt der Seitenfläche (210C) darstellt;
eine innere Struktur (520), die ein zweites Metallmaterial beinhaltet, das sich von dem ersten Metallmaterial unterscheidet, und in dem Raum positioniert ist; und
eine nicht leitende Struktur (530), die ein Polymer beinhaltet und mit der äußeren Struktur (510) und der inneren Struktur (520) verbunden ist,
wobei die äußere Struktur (510) und die innere Struktur (520) an einer Position elektrisch verbunden sind, die sich mit einer in der nicht leitenden Struktur (530) ausgebildeten Öffnung (540, 2040) überschneidet.

2. Elektronische Vorrichtung (200) nach Anspruch 1, ferner umfassend ein Dichtungselement (550, 2050), das in der Öffnung (540, 2040) positioniert ist.

3. Elektronische Vorrichtung (200) nach Anspruch 1 oder 2, wobei sich ein Abschnitt (515) der äußeren Struktur (510) und ein Abschnitt (525) der inneren Struktur (520) in Ausrichtung mit der Öffnung (540, 2040) überschneiden und elektrisch verbunden sind.

4. Elektronische Vorrichtung (200) nach einem der vorhergehenden Ansprüche, wobei die äußere Struktur (510) und die innere Struktur (520) durch Schweißen an einer Position, die sich mit der Öffnung (540, 2040) überschneidet, elektrisch verbunden sind.

5. Elektronische Vorrichtung (200) nach Anspruch 2, wobei das Dichtungselement (2050) mit der nicht leitenden Struktur (530) durch eine Schwalbenschwanzverbindung in der Öffnung (2040) gekoppelt ist.

6. Elektronische Vorrichtung (200) nach einem der vorhergehenden Ansprüche, ferner umfassend eine drahtlose Kommunikationsschaltung (192), die über die innere Struktur (520) mit der äußeren Struktur (510) elektrisch verbunden ist.

7. Elektronische Vorrichtung (200) nach einem der vorhergehenden Ansprüche, wobei:
die elektronische Vorrichtung (200) ferner eine drahtlose Kommunikationsschaltung (192) umfasst;
die innere Struktur (520) einen ersten Teil (521), der elektrisch mit der äußeren Struktur (510) verbunden ist, und einen zweiten Teil (522) beinhaltet, der physisch von dem ersten Teil (521) getrennt ist; und
die drahtlose Kommunikationsschaltung (192) über den ersten Teil (521) elektrisch mit der äußeren Struktur (510) verbunden ist.

8. Elektronische Vorrichtung (200) nach einem der vorhergehenden Ansprüche, wobei:
das Gehäuse (210) eine vordere Platte (201), die die vordere Fläche (210A) darstellt, und eine hintere Platte (202) beinhaltet, die die hintere Fläche (210B) darstellt; und
sich die nicht leitende Struktur (530) zwischen der äußeren Struktur (510) und der vorderen Platte (201) oder zwischen der äußeren Struktur (510) und der hinteren Platte (202) erstreckt, um einen Abschnitt der Seitenfläche (210C) darzustellen.

9. Elektronische Vorrichtung (200) nach einem der vorhergehenden Ansprüche, wobei das Gehäuse (210) ferner Folgendes beinhaltet:
eine vordere Platte, die die vordere Fläche darstellt, und eine hintere Platte, die die hintere Fläche darstellt; und
eine weitere nicht leitende Struktur, die sich zwischen der äußeren Struktur und der vorderen Platte oder zwischen der äußeren Struktur und der hinteren Platte erstreckt, um einen Abschnitt der Seitenfläche darzustellen, und die auf der äußeren Struktur angeordnet ist.

10. Elektronische Vorrichtung (200) nach einem der vorhergehenden Ansprüche, wobei die nicht leitende Struktur (530) auf der inneren Struktur (520) unter Verwendung von Einsatzspritzgießen angeordnet ist.

11. Elektronische Vorrichtung (200) nach einem der vorhergehenden Ansprüche, ferner umfassend ein Dichtmittel, das zumindest teilweise zwischen der inneren Struktur (520) und der nicht leitenden Struktur (530) positioniert ist.

12. Verfahren zum Herstellen eines Gehäuses einer elektronischen Vorrichtung (200), wobei das Verfahren Folgendes umfasst:
Ausbilden (1210) einer äußeren Struktur (510), die ein erstes Metallmaterial beinhaltet;
Ausbilden (1220) einer inneren Struktur (520), die ein zweites Metallmaterial beinhaltet, das sich von dem ersten Metallmaterial unterscheidet;
Ausbilden (1230) einer nicht leitenden Struktur (530), die ein Polymer beinhaltet und mit der inneren Struktur (520) gekoppelt ist;
Koppeln (1240) der äußeren Struktur (510) mit der nicht leitenden Struktur (530); und
elektrisches Verbinden (1250) der äußeren Struktur (510) und der inneren Struktur (520) an einer Position, die sich mit einer in der nicht leitenden Struktur (530) ausgebildeten Öffnung (540, 2040) überschneidet.

13. Verfahren nach Anspruch 12, wobei sich ein Abschnitt (515) der äußeren Struktur (510) und ein Abschnitt (525) der inneren Struktur (520) in Ausrichtung mit der Öffnung (540, 2040) überschneiden und elektrisch verbunden sind.

14. Verfahren nach Anspruch 12 oder 13, wobei die äußere Struktur (510) und die innere Struktur (520) durch Schweißen an einer Position, die sich mit der Öffnung (540, 2040) überschneidet, elektrisch verbunden sind.

15. Verfahren nach einem der Ansprüche 12 bis 14, ferner umfassend Ausbilden eines Dichtungselements (550, 2050), das in der Öffnung (540, 2040) angeordnet ist.

## Revendications

1. Dispositif électronique (200), comprenant :
un boîtier (210) qui comprend une surface avant (210A) du dispositif électronique (200), une surface arrière (210B) du dispositif électronique (200), et une surface latérale (210C) entourant au moins partiellement un espace entre la surface avant (210A) et la surface arrière (210B) ; et
un affichage (301) positionné dans l'espace et au moins partiellement vu à travers la surface avant (210A),
dans lequel le boîtier (210) comprend :
une structure extérieure (510) comprenant un premier matériau métallique et constituant au moins une partie de la surface latérale (210C) ;
une structure intérieure (520) comprenant un second matériau métallique différent du premier matériau métallique et positionnée dans l'espace ; et
une structure non conductrice (530) comprenant un polymère et reliée à la structure extérieure (510) et à la structure intérieure (520),
dans lequel la structure extérieure (510) et la structure intérieure (520) sont connectées électriquement à une position chevauchant une ouverture (540, 2040) formée dans la structure non conductrice (530).

2. Dispositif électronique (200) de la revendication 1, comprenant en outre un élément d'étanchéité (550, 2050) positionné dans l'ouverture (540, 2040).

3. Dispositif électronique (200) de la revendication 1 ou 2, dans lequel une partie (515) de la structure extérieure (510) et une partie (525) de la structure intérieure (520) se chevauchent dans l'alignement de l'ouverture (540, 2040) et sont connectées électriquement.

4. Dispositif électronique (200) de l'une quelconque des revendications précédentes, dans lequel la structure extérieure (510) et la structure intérieure (520) sont connectées électriquement par soudage à une position chevauchant l'ouverture (540, 2040).

5. Dispositif électronique (200) de la revendication 2, dans lequel l'élément d'étanchéité (2050) est couplé à la structure non conductrice (530) par l'intermédiaire d'un joint en queue d'aronde dans l'ouverture (2040).

6. Dispositif électronique (200) de l'une quelconque des revendications précédentes, comprenant en outre un circuit de communication sans fil (192) relié électriquement à la structure extérieure (510) par l'intermédiaire de la structure intérieure (520).

7. Dispositif électronique (200) de l'une quelconque des revendications précédentes, dans lequel :
le dispositif électronique (200) comprend en outre un circuit de communication sans fil (192) ;
la structure intérieure (520) comprend une première partie (521) connectée électriquement à la structure externe (510), et une seconde partie (522) physiquement séparée de la première partie (521) ; et
le circuit de communication sans fil (192) est connecté électriquement à la structure extérieure (510) par l'intermédiaire de la première partie (521).

8. Dispositif électronique (200) de l'une quelconque des revendications précédentes, dans lequel :
le boîtier (210) comprend une plaque avant (201) constituant la surface avant (210A), et une plaque arrière (202) constituant la surface arrière (210B) ; et
la structure non conductrice (530) s'étend entre la structure extérieure (510) et la plaque avant (201) ou entre la structure extérieure (510) et la plaque arrière (202) pour constituer une partie de la surface latérale (210C).

9. Dispositif électronique (200) de l'une quelconque des revendications précédentes, dans lequel le boîtier (210) comprend en outre :
une plaque avant constituant la surface avant, et une plaque arrière constituant la surface arrière ; et
une autre structure non conductrice qui s'étend entre la structure extérieure et la plaque avant ou entre la structure extérieure et la plaque arrière pour constituer une partie de la surface latérale et qui est disposée sur la structure extérieure.

10. Dispositif électronique (200) de l'une quelconque des revendications précédentes, dans lequel la structure non conductrice (530) est disposée sur la structure intérieure (520) en utilisant le moulage par injection d'insert.

11. Dispositif électronique (200) de l'une quelconque des revendications précédentes, comprenant en outre un produit d'étanchéité positionné au moins partiellement entre la structure intérieure (520) et la structure non conductrice (530).

12. Procédé de fabrication d'un boîtier d'un dispositif électronique (200), le procédé comprenant :
former (1210) une structure extérieure (510) comprenant un premier matériau métallique ;
former (1220) une structure intérieure (520) comprenant un second matériau métallique différent du premier matériau métallique ;
former (1230) une structure non conductrice (530) comprenant un polymère et couplée à la structure intérieure (520) ;
coupler (1240) la structure extérieure (510) à la structure non conductrice (530) ; et
connecter électriquement (1250) la structure extérieure (510) et la structure intérieure (520) à une position chevauchant une ouverture (540, 2040) formée dans la structure non conductrice (530).

13. Procédé de la revendication 12, dans lequel une partie (515) de la structure extérieure (510) et une partie (525) de la structure intérieure (520) se chevauchent dans l'alignement de l'ouverture (540, 2040) et sont connectées électriquement.

14. Procédé de la revendication 12 ou 13, dans lequel la structure extérieure (510) et la structure intérieure (520) sont connectées électriquement par soudage à une position chevauchant l'ouverture (540, 2040).

15. Procédé de l'une quelconque des revendications 12 à 14, comprenant en outre la formation d'un élément d'étanchéité (550, 2050) disposé dans l'ouverture (540, 2040).
